# EUROPEAN PATENT SPECIFICATION

(11) **EP 3 512 392 B1**
(45) Date of publication and mention of the grant of the patent: **20.10.2021**
(21) Application number: 17851573.0
(22) Date of filing: 14.09.2017
(51) Int. Cl.: B01F 3/12, B01F 7/00, B01F 7/16, B01F 15/02, A47J 43/044, A47J 43/06, B65D 85/804

(54) **MODULE FOR A SYSTEM FOR MIXING BEVERAGES**
MODUL FÜR EIN SYSTEM ZUM MISCHEN VON GETRÄNKEN
MODULE POUR UN SYSTÈME PERMETTANT DE MÉLANGER DES BOISSONS

(30) Priority: 15.09.2016 US 201662395366 P
(43) Date of publication of application: 24.07.2019
(73) Proprietor: GUDPOD CORP., Carefree, AZ 85377 (US)
(72) Inventor: DUFFY, Brendan, J., Sandy Hook, Connecticut 06482 (US); FAGEN, Ben, W., Jr., Enfield, Connecticut 06082 (US); KOKEN, Nickolas, T., Cave Creek, Arizona 85331 (US); MING, Lam Yick, Hong Kong (CN); FUNG, Alex, Zhongshan City Guangdong (CN); HUNG, Oscar, Chow, Hong Kong (CN)
(74) Representative: Epping - Hermann - Fischer
(86) International application number: PCT/US2017/051672
(87) International publication number: WO 2018/053207

(56) References cited:
- WO-A1-2013/130576
- WO-A1-2015/148027
- US-A- 4 193 698
- US-A- 4 408 690
- US-A- 5 863 126
- US-A1- 2002 048 215
- US-A1- 2015 329 282
- US-A1- 2016 214 787
- US-B1- 8 960 999

## Description

### RELATED APPLICATIONS

This application claims the benefit of and priority to U.S. provisional application serial no. 62/395,366, filed September 15, 2016, entitled "System for Mixing Beverages and Method of Doing the Same," and is related to International Patent Application No. PCT/US2015/017142, filed on February 23, 2015, which published as WO 2015/148027 (Attorney Docket No. 069766-000004WOPT).

Said WO2015/148027 discloses a module according to the preamble of claim 1.

### FIELD OF THE INVENTION

The present disclosure relates generally to systems for mixing beverages and, more particularly, to a system for mixing beverages using a compounding module having built-in mixing elements and storing material to be mixed therein.

### BACKGROUND

Known beverage mixing systems exist for mixing, for example, water with powder. One example of such a known beverage mixing system is a blender. When using a blender to mix beverages, typically, the blending container and blade therein is washed/rinsed between drinks. Another example of a known beverage mixing system uses a plastic pod with beverage material to be mixed therein and passes a stream of hot water through the pod and out an aperture created in the bottom of the pod, thereby mixing the beverage. With respect to certain beverages (e.g., nutraceutical beverages), these known beverage mixing systems, and others, have significant drawbacks. Specifically, because some such beverages can include pharmaceuticals therein, these known systems would have to be thoroughly cleaned between mixing one drink to the next to avoid cross contamination of the pharmaceuticals therein. The present disclosure is directed toward solving these and other problems.

### SUMMARY OF THE INVENTION

The invention is defined by a module according to claim 1.

According to an aspect of the present disclosure, which can be related to any other aspect disclosed herein, a compounding module of the present disclosure includes a housing and an agitator. The agitator can be partially retracted into housing of the compounding module prior to being fully retracted, such that a spin cycle can be conducted to aid in spinning off residue and/or water from the housing of the compounding module and/or the agitator, etc., for example, into a vessel/cup below. In such a partially retracted configuration of the agitator, a portion of the agitator can engage a corresponding portion of the housing such that rotation of the agitator (e.g., imparted by a drive shaft of a beverage mixing system) causes a corresponding rotation of the housing. As such, both the agitator and the housing rotate to spin off residue and/or fluid into the vessel, which aids in eliminating and/or reducing any dripping of fluid from the compounding module when being removed and discarded after its use.

In some aspects of the present disclosure, which can be related to any other aspect disclosed herein, the coupling of the compounding module with the beverage mixing system is "orientation agnostic," meaning that it does not matter what orientation the user inserts the compounding module into a coupling mechanism of the beverage mixing system to be received securely relative thereto. Here, orientation does not mean right-side-up (e.g., base of the module pointing toward the drinking vessel) versus upside-down (e.g., base of the compounding module pointing away from the drinking vessel), but rather an orientation taken along an axis passing from a top of the compounding module to its base. In some implementations, a switch (e.g., an electro-mechanical switch) is positioned relative to the coupling mechanism such that a proper and full insertion of the compounding module into the coupling mechanism engages the switch, which then allows the beverage mixing system to operate (e.g., mix a beverage, etc.). That is, unless the compounding module is inserted, the beverage mixing system will not operate.

In some aspects of the present disclosure, which can be related to any other aspect disclosed herein, the compounding module is coupled with the beverage mixing system via a coupling mechanism of the beverage mixing system. The coupling mechanism includes a pair of deflectable tabs that act like cantilevered beams to flex out of the way when coupling the compounding module thereto and when decoupling the compounding module therefrom. The deflectable tabs can include angled or ramped protrusions having defined and distinct angles such that an insert force of the compounding module into the coupling mechanism is different (e.g., less than) than a removal force of the compounding module from the coupling mechanism.

According to a further aspect of the present disclosure, which can be related to any other aspect disclosed herein, the compounding module includes a housing portion and an agitator portion. The agitator portion is held securely to the housing portion of the compounding module by a seal, during storage, but following dispensation of a material contained within the housing portion (e.g., by movement of the agitator relative to the housing), the agitator portion is drawn back toward the housing portion and coupled back to the housing portion so that both the agitator and housing portions can be removed as a unitary piece and then discarded. Many different examples are provided of providing a sealing interface between the agitator and the housing portions of the compounding module. For example, a mechanical seal is described having an interference fit or snap-fit. It is important for the agitator to remain coupled to the beverage mixing system during agitation, which can be vigorous and involve different types of motions, such as up-down and clockwise and anticlockwise rotations, which would tend to cause the agitator portion to become separated from the beverage mixing system and fall into the beverage container. To avoid this undesirable scenario, various features (e.g., undercuts in a collar portion of a drive shaft having a specific angle and locking tabs having a specific angle) are described for agitator retention during agitation. It should be noted also that the agitator can be separated from the housing in one direction (e.g., downwards), but is retracted back toward the housing in the opposite direction (e.g., upwards), which allows for different retention features to be engaged during both movements. Further, mechanical features of the housing and the agitator are positioned such the decoupling force necessary to separate the agitator form the housing is a first force and the recoupling force necessary to then reattach the agitator to the housing is a second force. The mechanical features can be designed and structured such that the decoupling force is greater than the recoupling force. Further, mechanical features of the agitator and the drive shaft are positioned such that the decoupling force necessary to separate the drive shaft from the agitator is a third force that is greater than the second force necessary to recouple the agitator to the housing. As such, the drive shaft is able to first recouple the agitator to the housing and then decouple itself from the agitator once the agitator is secured to the housing and thus not going to fall freely into the beverage container below.

While the above example contemplates having the material (e.g., a nutraceutical compound) exploit gravity by falling out of the bottom of the housing when the agitator is decoupled therefrom into the drinking vessel below, according to a further aspect of the present disclosure, which can be related to any other aspect disclosed herein, the compounding modules of the present disclosure can be designed without an agitator (e.g., without the agitator base and mixing elements coupled thereto) and instead a seal is coupled to a housing of the compounding module to prevent the material from falling out of the bottom of the housing. For example, a compounding module has a seal that is dissolvable in water or other fluid, such that the lowering of the housing into a fluid causes the seal to dissolve, thereby permitting the material therein to disperse prior to mixing. In some such implementations without the agitator, the housing itself is spun, which causes a mixing action of the fluid and material. Further, in some such implementations, the coupler of the housing is modified to engage with the drive shaft in the same, or similar, manner as the agitator, the difference being that the coupler is integral with and moves with the housing and not as a separate part that moves relative to the housing like the agitator as described elsewhere herein. Other types of seals can be used, such as a stretched elastomeric seal that pops when pierced (e.g., by a pin). Further, in some implementations, the housing can include one or more mixing elements protruding from an outer surface, an inner surface, or both.

In some aspects of the present disclosure, which can be related to any other aspect disclosed herein, the beverage mixing system includes an overcurrent sensor that monitors current draws of one or more motors and responsive to the current being drawn by the one or more motors exceeding a threshold, the overcurrent sensor is configured to cause and/or prevent one or more actions.

What follows in this summary section is several specific examples, which are not exhaustive of every conceivable aspect disclosed herein but which are contemplated by the present disclosure.

According to some implementations of the present disclosure, a module for use with a system includes a housing and an agitator. The housing defines an interior cavity and includes a boss that extends from a first end of the housing into the interior cavity towards a second opposing end of the housing. The boss has an exterior surface and defines an inner bore. The boss includes a flange extending outwardly from the exterior surface. The agitator includes a base, a shaft, and a mixing element. The shaft of the agitator extends from the base and is slidable relative to the inner bore of the boss such that the agitator is movable between a fully retracted position, a partially extended position, and a fully extended position. The mixing element of the agitator extends from the base and includes a portion that is configured to engage the flange of the boss in a non-rotational fashion in response to the agitator being in the partially extended position.

According to some implementations of the present disclosure, a method of mixing a beverage using a module and a beverage mixing system includes receiving a housing of the module in a coupling mechanism of the beverage mixing system. The housing defines an interior cavity and includes a boss that extends from a first end of the housing into the interior cavity towards a second opposing end of the housing. The boss has an exterior surface and defining an inner bore. The boss includes a flange extending outwardly from the exterior surface. The module includes an agitator slidably coupled to the boss of the housing. The agitator includes a base, a shaft, and a mixing element. The module includes a material in the interior cavity. The coupling mechanism and the module received therein are translated, in a first direction, to a mixing position within a vessel containing a fluid therein. A drive shaft of the beverage mixing system is translated, in the first direction, relative to the coupling mechanism such that the drive shaft engages the shaft of the agitator. The drive shaft is further translated, in the first direction, relative to the coupling mechanism such that the drive shaft causes the agitator to move from a fully retracted position to a fully extended position, thereby positioning at least a portion of the material in the module in the fluid contained by the vessel. The drive shaft is rotated, with the agitator in the fully extended position, thereby causing the agitator to rotate in a corresponding manner. The drive shaft is translated, in a second direction that is opposite the first direction, relative to the coupling mechanism such that the drive shaft causes the agitator to move from the fully extended position to a partially extended position. The coupling mechanism and the module received therein are translated, in the second direction, to a spin-cycle position such that at least a portion of the housing and at least a portion of the agitator remain within the vessel. The drive shaft is rotated, with the module in the spin-cycle position and with the agitator in the partially extended position, thereby causing (i) the agitator to rotate in a corresponding manner, (ii) a portion of the mixing element of the agitator to engage the flange of the boss, and (iii) the housing to rotate in a corresponding manner.

According to some implementations of the present disclosure, a method of mixing a beverage using a module and a beverage mixing system includes receiving the module in a coupling mechanism of the beverage mixing system. The module includes a housing and an agitator slidably coupled to the housing. The coupling mechanism and the module received therein are translated, in a first direction, to a mixing position within a vessel. A drive shaft of the beverage mixing system is translated, in the first direction, relative to the coupling mechanism such that the drive shaft engages the agitator and causes the agitator to move from a fully retracted position to a fully extended position. The drive shaft is rotated, with the agitator in the fully extended position, thereby causing the agitator to rotate in a corresponding manner. The coupling mechanism and the module received therein are translated, in a second direction that is opposite the first direction, to a spin-cycle position such that at least a portion of the housing and at least a portion of the agitator remain within the vessel. The drive shaft is rotated, with the module in the spin-cycle position, thereby causing (i) the agitator to rotate in a corresponding manner, (ii) a portion of the agitator to engage the housing, and (iii) the housing to rotate in a corresponding manner.

According to some implementations of the present disclosure, a beverage mixing system includes a system housing, a tub, a drive shaft, and a coupling mechanism. The system housing is configured to rest on a surface. The tub is movably coupled to the system housing such that the tub is movable with respect to the system housing between a fully retracted position, a fully extended position, and a partially retracted position. The drive shaft is movably coupled to the tub such that the drive shaft is movable with respect to the tub between a fully retracted position, a fully extended position, and a partially retracted position. The coupling mechanism is coupled to the tub such that the coupling mechanism moves with the tub. The coupling mechanism includes a body and a pair of arms extending from the body. Each of the arms includes a deflectable tab.

According to some implementations of the present disclosure, a beverage mixing system includes a system housing, a tub, a coupling mechanism, and a switch assembly. The system housing is configured to rest on a surface. The tub is movably coupled to the system housing. The tub includes an aperture. The coupling mechanism is coupled to the tub and configured to receive a module therein. The switch assembly is coupled to the tub. The switch assembly includes an actuator that is biased such that a tip of the actuator protrudes through the aperture in the tub.

According to some implementations of the present disclosure, a beverage mixing system includes a system housing, a tub, a first motor, a drive shaft, a second motor, and an overcurrent sensor. The system housing is configured to rest on a surface. The tub is movably coupled to the system housing. The first motor is configured to move the tub with respect to the system housing. The drive shaft is at least partially positioned within the tub and movable with respect to the tub. The second motor is configured to move the drive shaft with respect to the tub. The overcurrent sensor is positioned within the system housing and electrically coupled to the first and the second motors. The overcurrent sensor is configured to sense a first current draw of the first motor and a second current draw of the second motor and in response to the first current draw, the second current draw, or a combination thereof exceeding a threshold current draw, the overcurrent sensor is configured to prevent (i) movement of the tub relative to the system housing, (ii) movement of the drive shaft relative to the tub, or (iii) both (i) and (ii).

According to some implementations of the present disclosure, a module for use with a system includes a housing, a coupling stem, one or more mixing elements, and a sealing element. The housing has a closed end and an opposing open end and defines an interior cavity. The coupling stem is attached to the closed end of the housing and extends away from an outer surface of the housing. The coupling stem includes a translation locking feature and a rotation locking feature. The one or more mixing elements extend from the outer surface of the housing. The sealing element is coupled to the opposing open end of the housing, thereby sealing the interior cavity.

According to some implementations of the present disclosure, a module for use with a system includes a housing, a coupling stem, and a sealing element. The housing has a closed end and an opposing open end and defines an interior cavity. The coupling stem is attached to the closed end of the housing and extends away from an outer surface of the housing. The coupling stem includes a translation locking feature and a rotation locking feature. The sealing element is coupled to the opposing open end of the housing, thereby sealing the interior cavity.

According to some implementations of the present disclosure, a module for use with a system includes a housing, an agitator, and a sealing element. The housing defines an interior cavity and includes a boss that extends from a closed end of the housing into the interior cavity towards an opposing open end of the housing. The boss defines an inner bore. The agitator includes a shaft and one or more mixing elements. The one or more mixing elements are coupled to the shaft and extend outwardly from the shaft. The agitator is slidable relative to the inner bore of the boss such that the agitator is movable between a retracted position and an extended position. The one or more mixing elements are disposed adjacent to the opposing open end of the housing responsive to the agitator being in the retracted position. The sealing element is coupled to the opposing open end of the housing, thereby sealing the interior cavity.

According to some implementations of the present disclosure, a method of mixing a beverage using a module and a beverage mixing system includes engaging a coupling stem of the module by a drive shaft of the beverage mixing system. The module includes a housing having a closed end and an opposing open that defines an interior cavity, and a sealing element coupled to the opposing open end of the housing, thereby sealing the interior cavity. The module includes a material in the interior cavity. The drive shaft and the module engaged therewith are translated, in a first direction, to a mixing position within a vessel containing a fluid therein. The sealing element is caused to be removed from the second opposing end of the housing, thereby unsealing the interior cavity and positioning at least a portion of the material in the module in the fluid contained by the vessel. The drive shaft is rotated, thereby causing the agitator to rotate in a corresponding manner. The drive shaft and the module engaged therewith are translated, in a second direction that is opposite the first direction.

Additional aspects of the present disclosure will be apparent to those of ordinary skill in the art in view of the detailed description of various implementations, which is made with reference to the drawings, a brief description of which is provided below.

### BRIEF DESCRIPTION OF THE DRAWINGS

FIG. 1 is a perspective view of a beverage mixing system, a compounding module, and a vessel according to some implementations of the present disclosure;
FIG. 2 is a perspective view of the beverage mixing system of FIG. 1 with an outer housing removed to illustrate several internal components and with the compounding module coupled to the beverage mixing system according to some implementations of the present disclosure;
FIG. 3 is a perspective view of the beverage mixing system and compounding module of FIG. 2 with a tub of the beverage mixing system lowered, thereby positioning the compounding module partially in the vessel;
FIG. 4 is a perspective view of the beverage mixing system and compounding module of FIG. 3 with a drive shaft of the beverage mixing system engaging the compounding module in a mixing position causing an agitator of the compounding module to separate from a housing of the compounding module;
FIG. 5 is a perspective view of the beverage mixing system and compounding module of FIG. 4 with (i) the tub of the beverage mixing system partially raised and in a spin cycle position and (ii) the drive shaft of the beverage mixing system partially raised and in a spin cycle position;
FIG. 6A is a partially exploded perspective view of the beverage mixing system of FIG. 1 according to some implementations of the present disclosure;
FIG. 6B is a side cross-sectional view of the beverage mixing system of FIG. 1 according to some implementations of the present disclosure;
FIG. 6C is a front cross-sectional view of the beverage mixing system of FIG. 1 according to some implementations of the present disclosure;
FIG. 7A is a perspective view of a drive shaft of the beverage mixing system of FIG. 1 according to some implementations of the present disclosure;
FIG. 7B is an exploded perspective view of the drive shaft of FIG. 7A;
FIG. 7C is a partial cross-sectional view of the drive shaft of FIG. 7A;
FIG. 8A is a partial perspective view of the compounding module of FIG. 1, which is a module according to the invention, a coupling mechanism of the beverage mixing system of FIG. 1, and a portion of the drive shaft of the beverage mixing system of FIG. 1 in a fully retracted position illustrating an initial relationship of the elements prior to coupling of the compounding module with the coupling mechanism according to some implementations of the present disclosure;
FIG. 8B is a partial perspective view illustrating the compounding module coupled with the coupling mechanism of FIG. 8A with the drive shaft in the fully retracted position;
FIG. 8C is a partial perspective view illustrating the drive shaft coupled with an agitator of the compounding module of FIG. 8A;
FIG. 8D is a partial perspective view illustrating the drive shaft in a fully extended position and coupled with the agitator such that the agitator can rotate without engaging a housing of the compounding module;
FIG. 8E is a partial perspective view illustrating the drive shaft in a partially extended position and coupled with the agitator such that rotation of the agitator causes a portion of a pair of mixing elements of the agitator to engage a portion of the housing and cause the housing to rotate correspondingly;
FIG. 9A is a top perspective view of the coupling mechanism of FIG. 8A;
FIG. 9B is a bottom perspective view of the coupling mechanism of FIG. 9A;
FIG. 9C is a bottom plan view of the coupling mechanism of FIG. 9A;
FIG. 9D is a cross-sectional bottom view of the coupling mechanism of FIG. 9C;
FIG. 10 is a plan view of a label or substrate that can be applied to any of the compounding modules disclosed herein;
FIG. 11A is a perspective view of another compounding module according to some implementations of the present disclosure, said module being not a module according to the invention;
FIG. 11B is a partial-perspective view of the compounding module of FIG. 11A illustrating an interior cavity;
FIG. 12 is a perspective view of a further compounding module according to some implementations of the present disclosure, said module being not a module according to the invention;
FIG. 13A is top perspective view yet another compounding module according to some implementations of the present disclosure, said module being not a module according to the invention;
FIG. 13B is a bottom perspective view of the compounding module of FIG. 13A;
FIG. 14 is perspective view of yet a further compounding module according to some implementations of the present disclosure, said module being not a module according to the invention;
FIG. 15 is perspective view of another compounding module according to some implementations of the present disclosure, said module being not a module according to the invention;
FIG. 16A is an exploded view of a further compounding module according to some implementations of the present disclosure, said module being not a module according to the invention;
FIG. 16B is an assembled view of the compounding module of FIG. 16A;
FIG. 17 is a perspective view of an agitator for use with a compounding module according to some implementations of the present disclosure, said agitator being not part of a module according to the invention; and
FIG. 18 is a perspective view of another compounding module according to some implementations of the present disclosure, said module being not a module according to the invention.

While the present disclosure is susceptible to various modifications and alternative forms, specific implementations have been shown by way of example in the drawings and will be described in detail herein.

### DETAILED DESCRIPTION

While this disclosure is susceptible to implementation in many different forms, there is shown in the drawings and will herein be described in detail preferred implementations of the disclosure with the understanding that the present disclosure is to be considered as an exemplification of the principles of the disclosure and is not intended to limit the broad aspect of the disclosure to the implementations illustrated.

It will be understood that the term "nutraceutical," indicates a portmanteau of the words "nutrition" and "pharmaceutical," and as used herein is an edible product (e.g., food or food product) that may (but does not have to) in some implementations reportedly provide health and/or medical benefits, including the prevention and treatment of disease, and that this edible product may be of any kind, but can be the form of a dry or fluid (e.g., a slurry) concentrate intended for combination with a liquid (such as water) prior to ingestion by an end user. Nothing herein will limit the interpretation of nutraceutical to requiring a pharmaceutical product. It will also be understood that nutraceutical may additionally include those compounds, vitamins, flavorings (e.g., coco powder), minerals, drugs, or pharmaceutical compositions (without limit to any) that are believed to have a physiological benefit or provide protection against chronic disease. With recent developments in cellular-level nutraceutical agents the proposed use will be understood as non-limiting and is to be broadly interpreted to include any complementary and/or alternative therapies now known or later developed. It will further be understood that nutraceutical may additionally or alternatively include probiotics, viruses, antibodies, DNA, RNA, any other living organisms, or any combinations thereof.

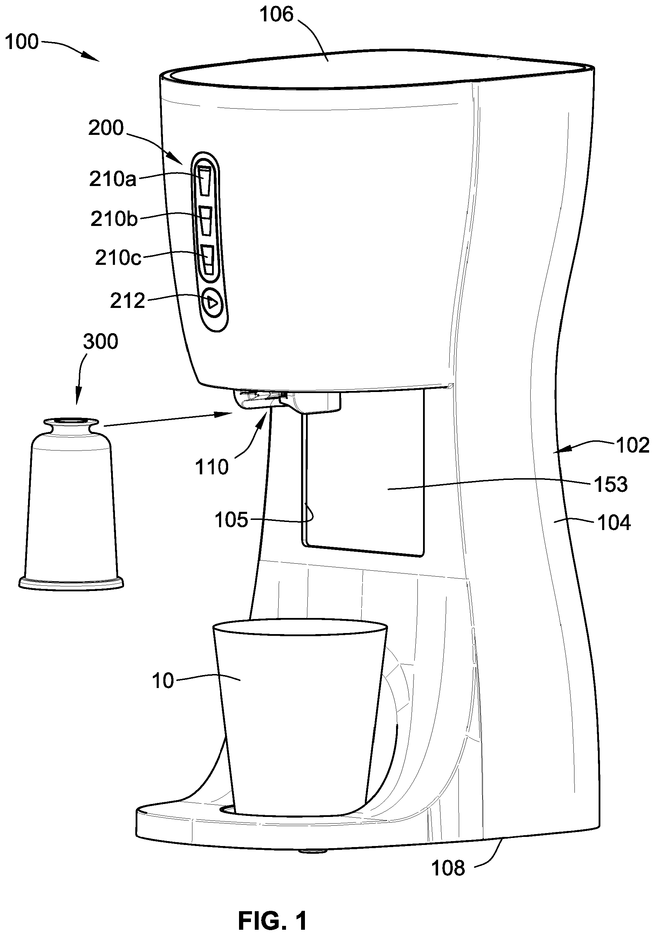

Referring to FIG. 1, a beverage mixing system 100 for mixing a beverage in a vessel 10 is shown. A compounding module 300 is also shown for coupling with the beverage mixing system 100 for use in mixing the beverage in the vessel 10. The compounding module 300 includes or contains a material therein (e.g., a nutraceutical compound, a pharmaceutical compound, vitamins, protein powder, chocolate/coco powder, etc., or any combination thereof), that is dispensed and/or allowed to fall into the vessel 10 during operation of the beverage mixing system 100 as described in detail below. The vessel 10 includes a fluid (not shown), such as, for example, water, milk, juice, etc., or any combination thereof, that is to be mixed with the material contained in the compounding module to create a mixed beverage having a homogeneous consistency suitable for drinking.

As shown in FIG. 1, the beverage mixing system 100 includes a housing or body 102, a coupling mechanism 110 that receives and/or couples with the compounding module 300, and a control panel assembly 200 for use in operating/controlling the beverage mixing system 100. The housing 102 includes a main body portion 104, a top cover portion 106, and a base portion 108. In some implementations, one or more of the main body portion 104, the top cover portion 106, and the base portion 108 are integrally formed as a single monolithic component (e.g., the main body portion 104 and the base portion can be integrally formed as a single component) or as individual separate and distinct components.

The control panel assembly 200 includes a multitude of user selectable inputs or elements or buttons. As shown, the control panel assembly 200 includes a first fluid level selectable input 210a (e.g., corresponding to a vessel having a first amount or a maximum amount of fluid therein), a second fluid level selectable input 210b (e.g., corresponding to a vessel having a second amount or a medium amount of fluid therein), a third fluid level selectable input 210c (e.g., corresponding to a vessel having a third amount or a minimum amount of fluid therein), and a cycle-start selectable input 212, which when activated causes the beverage mixing system 100 to begin a mixing cycle. Various other user selectable inputs can be included in the control panel assembly 200.

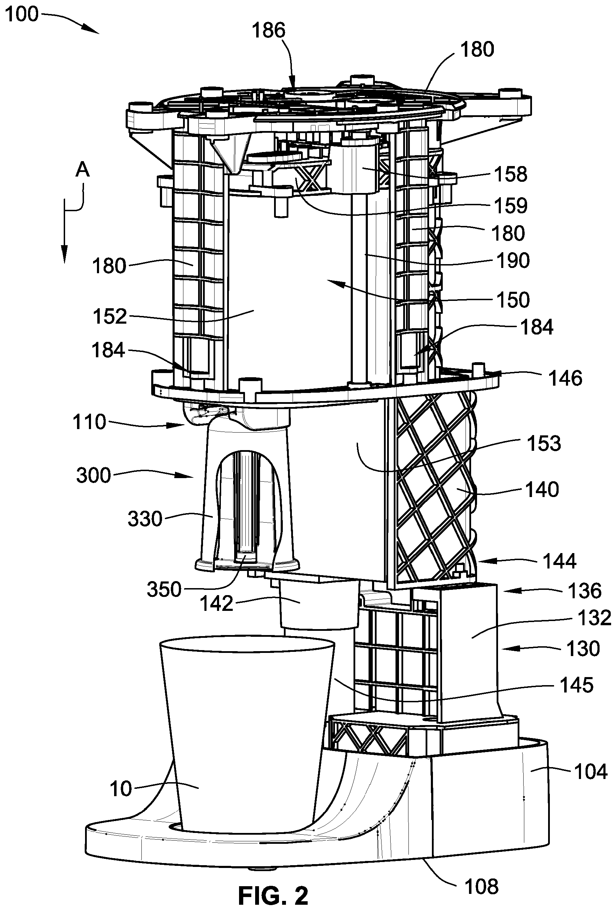

Referring to FIG. 2, the beverage mixing system 100 is shown with a portion of the housing 102 removed to reveal several of the internal components therein. Further, the compounding module 300 is shown as being coupled to and received in the coupling mechanism 110 of the beverage mixing system 100. A portion of a housing 330 of the compounding module 300 is also removed to illustrate an agitator 350 of the compounding module 300 contained therein. As shown in FIG. 2, the beverage mixing system 100 is in a first or a fully retracted position or a home/initial position such that the compounding module 300, while coupled to the coupling mechanism 110, is positioned above and not inside the vessel 10. The beverage mixing system 100 remains in this home position until the beverage mixing system 100 is turned on and until an input is received, for example, via the control panel assembly 200 (FIG. 1) described above.

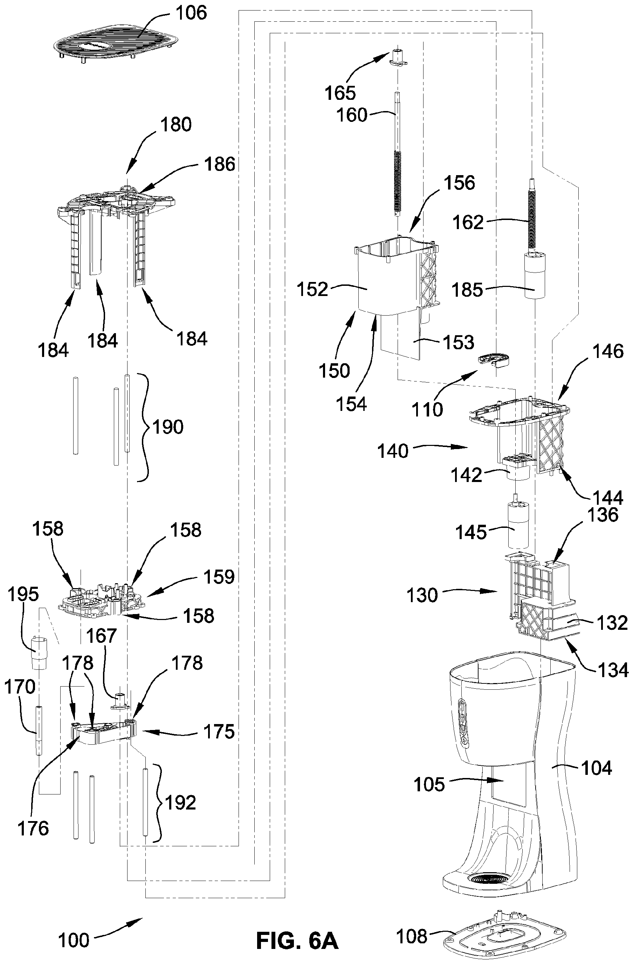

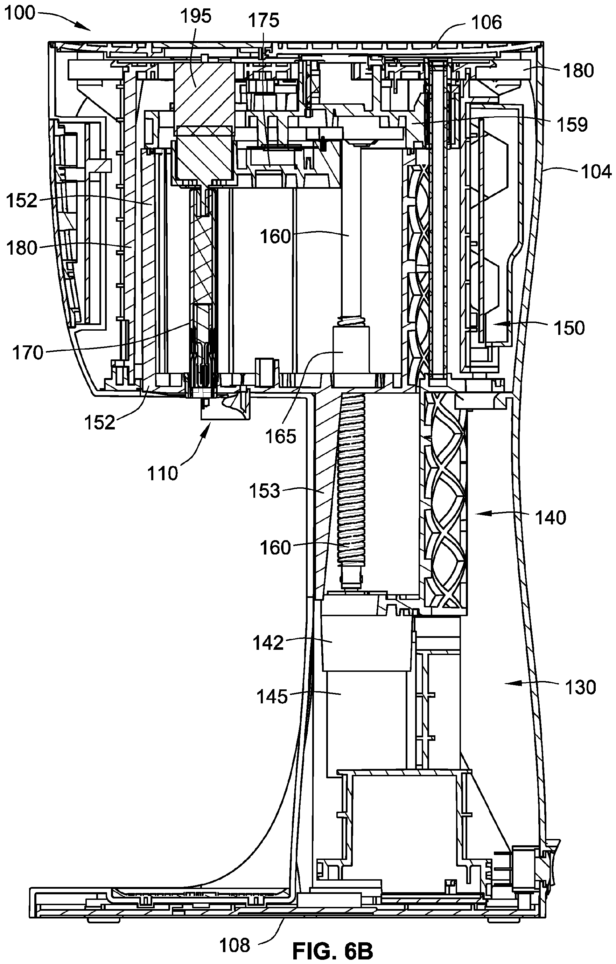

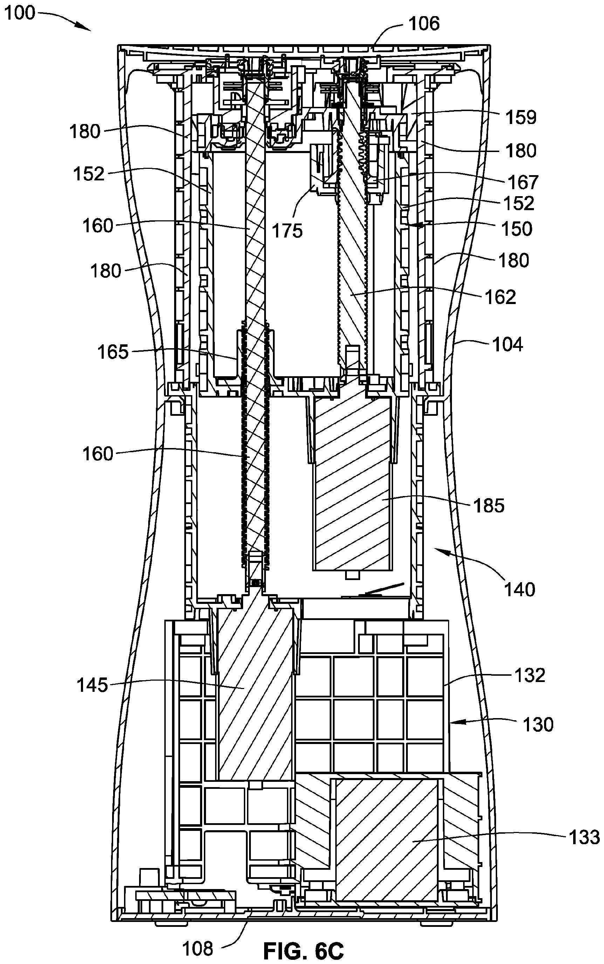

With reference to FIG. 2 and FIG. 6A (which is a partially exploded view of the beverage mixing system 100) and FIGS. 6B and 6C (which are assembled cross-sectional views of the beverage mixing system 100), the beverage mixing system 100 further includes a transformer assembly 130, a chassis 140, a tub 150, and a bridge 180. The transformer assembly 130 includes a transformer housing 132 and a transformer 133 (shown in FIG. 6C) therein. The transformer housing 132 has a bottom or lower portion 134 (FIG. 6A) and a top or upper portion 136 (FIG. 6A). The bottom or lower portion 134 of the transformer housing 132 is attached to the base 108 of the housing 102 of the beverage mixing system 100 such that the transformer assembly 130 does not move relative to the housing 102 during operation of the beverage mixing system 100.

The chassis 140 is attached to the top or upper portion 136 of the transformer housing 132 such that the chassis 140 does not move relative to the housing 102 (or relative to the transformer housing 132) during operation of the beverage mixing system 100. The chassis 140 includes a motor mount 142 extending below a bottom or lower portion 144 (FIG. 6A) of the chassis 140. The motor mount 142 is for receiving a tub motor 145 at least partially therein. The tub motor 145 is mounted in and/or to the motor mount 142 and thus also does not move relative to the housing 102 (or relative to the chassis 140) during operation of the beverage mixing system 100.

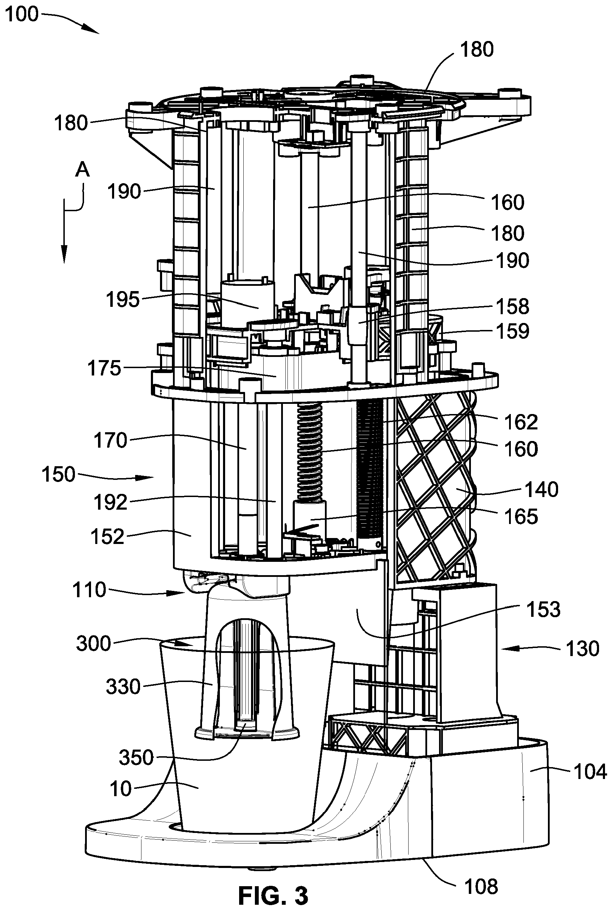

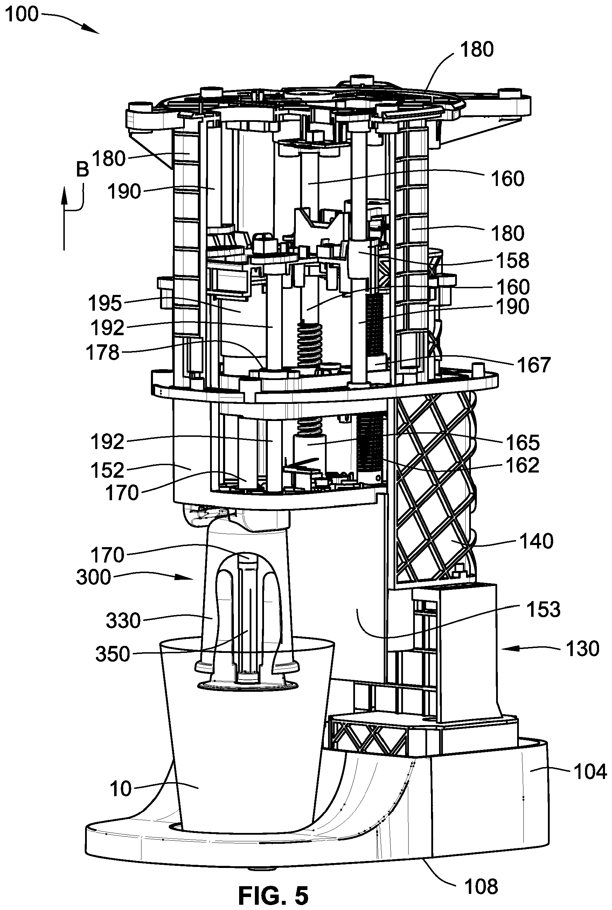

The tub motor 145 causes the tub 150 to move relative to the housing 102 during operation of the beverage mixing system 100. Specifically, the tub motor 145 is attached to a tub leadscrew 160 (FIGS. 6A-6C) and the tub leadscrew 160 is coupled to a tub-leadscrew threaded bearing 165 (FIGS. 6A-6C), which is attached to the tub 150 (as shown in FIGS. 3 and 6B-6C). As such, rotation of the tub motor 145 in a first rotational direction (e.g., clockwise) causes the tub leadscrew 160 to rotate in the first rotational direction within the tub-leadscrew threaded bearing 165. Due to the pitch of an external thread of the tub leadscrew 160 and a corresponding pitch of an internal thread of the tub-leadscrew threaded bearing 165, the rotation of the tub leadscrew 160 in the first rotational direction causes the tub-leadscrew threaded bearing 165 and the tub 140 attached thereto to move or translate in a direction of arrow A (FIGS. 2 and 3) (e.g., a first generally vertical direction). Similarly, rotation of the tub motor 145 in a second opposing rotational direction (e.g., counterclockwise) causes the tub leadscrew 160 to rotate in the second opposing rotational direction within the tub-leadscrew threaded bearing 165. Due to the pitch of the external thread of the tub leadscrew 160 and the corresponding pitch of the internal thread of the tub-leadscrew threaded bearing 165, the rotation of the tub leadscrew 160 in the second opposing rotation direction causes the tub-leadscrew threaded bearing 165 and the tub 140 attached thereto to move or translate in a direction of arrow B (FIG. 5) (e.g., a second generally vertical direction).

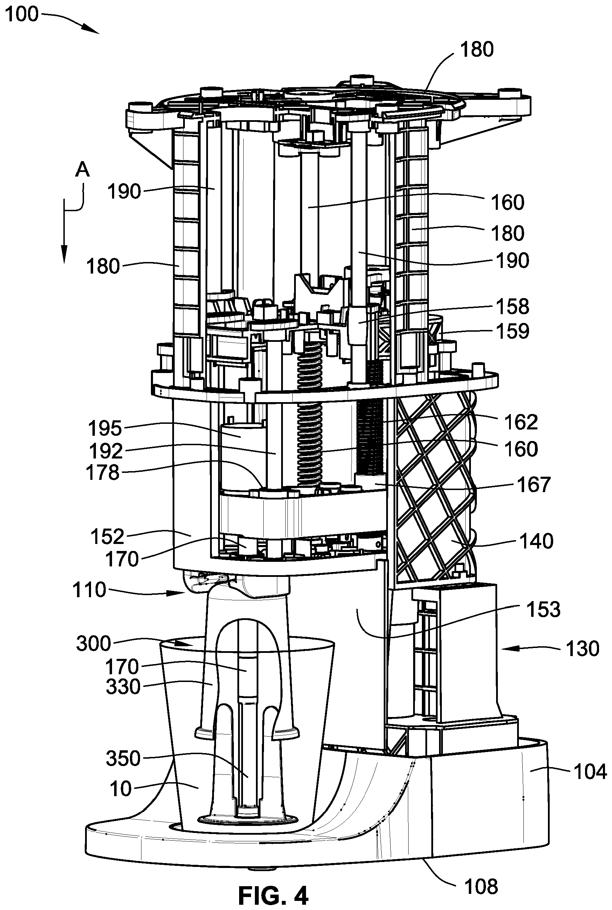

As shown in FIG. 2, a bottom or lower portion 184 of the bridge 180 is attached to a top or upper portion 146 (FIG. 6A) of the chassis 140 such that the bridge 180 does not move relative to the housing 102 (or relative to the chassis 140) during operation of the beverage mixing system 100. A top or upper portion 186 of the bridge 180 provides upper mounting locations for a set of tub guide rails 190 (FIG. 6A) along which the tub 150 slides. Similarly, the top or upper portion 146 of the chassis 140 provides lower mounting locations for the set of tub guide rails 190. The bridge 180 and the chassis 140 collectively provide a frame that supports the tub 150 and provides space in which the tub 150 is movable between a multitude of positions (e.g., a first or fully retracted or home position as shown in FIGS. 2, 6B-6C; a second or fully extended or operational position as shown in FIGS. 3 and 4; or a third or partially extended or spin-cycle position as shown in FIG. 5).

As best shown in FIGS. 2 and 6A, the tub 150 includes a main body 152, a skirt or panel 153 extending downward from a bottom or lower portion 154 (FIG. 6A) of the main body 152, and a tub cover 159 (FIG. 6A) attached to a top or upper portion 156 of the main body 152. The tub cover 159 includes a set of slidable bearings 158 (FIG. 6A) therein for slidable engagement with the set of tub guide rails 190. As best shown in FIG. 1, the skirt 153 of the tub 150 obscures an opening 105 (FIGS. 1 and 6A) in the main body portion 104 of the housing 102 when the tub 150 is the first or fully retracted or home position as shown in FIGS. 2 and 6B-6C. The opening 105 provides space for the tub 150 to be moved (e.g., lowered in a downward direction towards the base portion 106, the direction of arrow A) during operation of the beverage mixing system 100. The coupling mechanism 110 is attached to the bottom or lower portion 154 of the main body 152 of the tub 150 such that the coupling mechanism 110 moves with the tub 150.

During operation of the beverage mixing system 100, in response to an input to begin a mixing cycle (e.g., receiving a input via the control panel assembly 200), the tub 150 is lowered (via the tub motor 145, the tub leadscrew 160, the tub-leadscrew threaded bearing 165, etc.) from a first position (FIGS. 2, 6B-6C) to a second position (FIG. 3) in the direction of arrow A. As such, the coupling mechanism 110, and the compounding module 300 coupled thereto, are moved from a first position or a fully retracted or home position (FIGS. 2 and 6B-6C) to a second position or a fully extended or operational position (FIG. 3). As shown in FIG. 3, the compounding module 300 is positioned at least partially within the vessel 10. A comparison of FIGS. 2 and 3 highlights some of the various moving components of the beverage mixing system 100.

Portions of the tub 150 are removed in FIGS. 3-5 to reveal several of the internal components therein. Specifically, as shown in FIG. 3, a drive shaft 170 of the beverage mixing system 100 is at least partially contained within the main body 152 of the tub 150. As is described in further detail below, the drive shaft 170 is movable in the direction of arrow A to engage the agitator 350 of the compounding module to cause the agitator 350 to move in the direction of arrow A and to rotate (e.g., clockwise, counterclockwise, or both). As shown in FIG. 3, in some implementations, a forward most end or tip of the drive shaft 170 is contained completely within the tub 150 such that no part of the drive shaft 170 is protruding therefrom. The drive shaft 170 is coupled to a motor plate 175 (FIGS. 3, 4, 6A, and 6C) such that the drive shaft 170 moves with the motor plate 175.

The motor plate 175 is moveable in the direction of arrow A and arrow B relative to the tub 150 during operation of the beverage mixing system 100 via a motor-plate motor 185 (FIGS. 6A and 6C). The motor-plate motor 185 (best shown in FIG. 6C) is mounted to the bottom or lower portion 154 (FIG. 6A) of the main body 152 of the tub 150 and thus moves with the tub 150. Further, the motor-plate motor 185 is coupled with a motor-plate leadscrew 162 (FIGS. 3, 4, 5, 6A, and 6C). The motor-plate leadscrew 162 is also coupled to a motor-plate-leadscrew threaded bearing 167, which is attached to the motor plate 175 (as shown in FIGS. 4, 5, and 6C). As such, rotation of the motor-plate motor 185 in a first rotational direction (e.g., clockwise) causes the motor-plate leadscrew 162 to rotate in the first rotational direction within the motor-plate-leadscrew threaded bearing 167. Due to the pitch of an external thread of the motor-plate leadscrew 162 and a corresponding pitch of an internal thread of the motor-plate-leadscrew threaded bearing 167, the rotation of the motor-plate leadscrew 162 in the first rotational direction causes the motor-plate-leadscrew threaded bearing 167 and the motor plate 175 attached thereto to move or translate in the direction of arrow A (FIG. 4) (e.g., the first generally vertical direction). Similarly, rotation of the motor-plate motor 185 in a second opposing rotational direction (e.g., counterclockwise) causes the motor-plate leadscrew 162 to rotate in the second opposing rotational direction within the motor-plate-leadscrew threaded bearing 167. Due to the pitch of the external thread of the motor-plate leadscrew 162 and the corresponding pitch of the internal thread of the motor-plate-leadscrew threaded bearing 167, the rotation of the motor-plate leadscrew 162 in the second opposing rotation direction causes the motor-plate-leadscrew threaded bearing 167 and the motor plate 175 attached thereto to move or translate in the direction of arrow B (FIG. 5) (e.g., the second generally vertical direction).

By mounting the motor-plate motor 185 to the tub 150 so that they move together avoids having to coordinate movement among multiple motors or actuators. Additional flexibility is gained by simplifying the motor controls. The motors can be controlled sequentially as opposed to having to coordinate simultaneous motor operations. By having a linear path of operation of the various motors, each motor operation can be optimized without having to coordinate among multiple motors simultaneously.

The tub cover 159 of the tub 150 provides upper mounting locations for a set of motor-plate guide rails 192 (FIGS. 3-6A) along which the motor plate 175 slides. Similarly, the bottom or lower portion 154 of the main body 152 of the tub 150 provides lower mounting locations for the set of motor-plate guide rails 192. The motor plate 175 includes a set of slidable bearings 178 (FIGS. 4-6A) therein for slidable engagement with the set of motor-plate guide rails 192.

The motor plate 175 also includes a motor mount 176 (FIG. 6A) for receiving an agitator motor 195 at least partially therein. The agitator motor 195 is mounted in and/or to the motor mount 176 and thus also moves with the motor plate 175 and the drive shaft 170 relative to the tub 150 during operation of the beverage mixing system 100. The agitator motor 195 causes the drive shaft 170 to rotate (e.g., clockwise, counterclockwise, or both) relative to the motor plate 175 and the tub 150 (and the housing 102) during operation of the beverage mixing system 100.

As described above, during operation of the beverage mixing system 100, in response to an input to begin a mixing cycle (e.g., receiving a input via the control panel assembly 200), the tub 150 is lowered from the first position (FIGS. 2 and 6B-6C) to the second position (FIG. 3), which causes the coupling mechanism 110, and the compounding module 300 coupled thereto, to be moved correspondingly as shown in FIG. 3. Further in response to the input, with the compounding module 300 so positioned (FIG. 3), during operation of the beverage mixing system 100, the motor plate 175 is lowered (via the motor-plate motor 185, the motor-plate leadscrew 162, the motor-plate-leadscrew threaded bearing 167, etc.) from a first position (FIG. 3) to a second position (FIG. 4) in the direction of arrow A. As such, the drive shaft 170, which is coupled to the motor plate 175, is moved from a first or fully retracted position relative to the tub 150 (FIGS. 2 and 3) to a second or fully extended position relative to the tub 150 (FIG. 4) in the direction of arrow A. This movement of the drive shaft 170 causes the drive shaft 170 to engage the agitator 350 of the compounding module 300 and decouple the agitator 350 from the housing 330 such that the agitator 350 slides in the direction of arrow A relative to the housing 330, which is described in further detail below. With the agitator 350 so positioned as shown in FIG. 4, the agitator motor 195 is actuated to cause the drive shaft 170 to rotate, which causes the agitator 350 to rotate relative to the housing 330 and the coupling mechanism 110. During mixing, the drive shaft 170 can spin at a rate of between about 650-750 rpms (revolutions per minute), whereas during spinning, the drive shaft can spin at a higher rate, such as between about 950-1050 rpms. In some implementations, spinning the drive shaft at too high a rate can cause the liquid being mixed, particularly lighter or low viscosity liquids, to begin to splash upwards onto the machine. The drive shaft 170 during the initial movement can produce a downward force of about 50 pounds or between 20-50 pounds to decouple the agitator 350 from the housing 330. However, to retract or snap the agitator 350 back into the housing 330 after completion of the spin cycle, a much lower retraction force is needed by the drive shaft, for example, in the range of 3-10 pounds, or between 7-10 pounds.

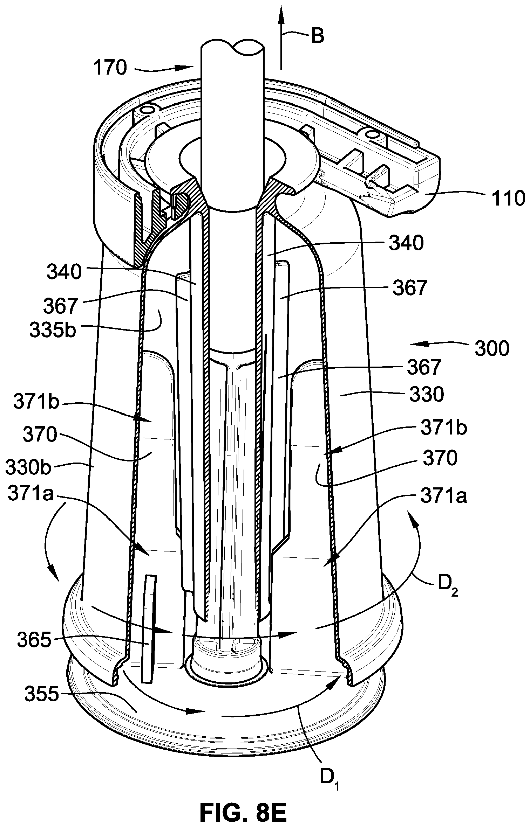

After rotation of the agitator 350, in some implementations during operation of the beverage mixing system 100, the beverage mixing system 100 conducts a spin-cycle to aid in the removal of residue and/or fluid on the housing 330 and/or the agitator 350 of the compounding module 300. In such implementations, once the beverage is mixed, the agitator motor 195 stops rotating the drive shaft 170. Then the tub 150 and the motor plate 175 are raised either at the same time, one after the other, or some combination thereof to the positions shown in FIG. 5 (as compared with FIG. 4). Specifically, the motor plate 175 is raised (via the motor-plate motor 185, the motor-plate leadscrew 162, the motor-plate-leadscrew threaded bearing 167, etc.) from the second position (FIG. 4) to a third position (FIG. 5) in the direction of arrow B. As such, the drive shaft 170, which is coupled to the motor plate 175, is moved from the second or fully extended position relative to the tub 150 (FIG. 4) to a third or partially extended position relative to the tub 150 (FIG. 5) in the direction of arrow B. This movement of the drive shaft 170 causes the drive shaft 170 to move or pull the agitator 350 in the direction of arrow B further into the housing 330 such that the agitator 350 slides in the direction of arrow B relative to the housing 330. Similarly, the tub 150 is raised (via the tub motor 145, the tub leadscrew 160, the tub-leadscrew threaded bearing 165, etc.) from the second position (FIGS. 3 and 4) to a third position (FIG. 5) in the direction of arrow B. As such, the coupling mechanism 110, which is attached to the tub 150, and the housing 330 of the compounding module 300 coupled thereto, are moved from the second position or the fully extended or operational position (FIGS. 3 and 4) to a third position or a partially extended or spin-cycle position (FIG. 5) in the direction of arrow B. With the beverage mixing system 100 positioned as shown in FIG. 5, the spin-cycle is conducted by rotating the drive shaft 170 via the agitator motor 195. As described further in reference to FIG. 8E, the rotation of the drive shaft 170 (when positioned as shown in FIGS. 5 and 8E) causes the agitator 350 to spin and engage a portion of the housing 330, which results in the housing 330 also spinning relative to the coupling mechanism 110 and the housing 102.

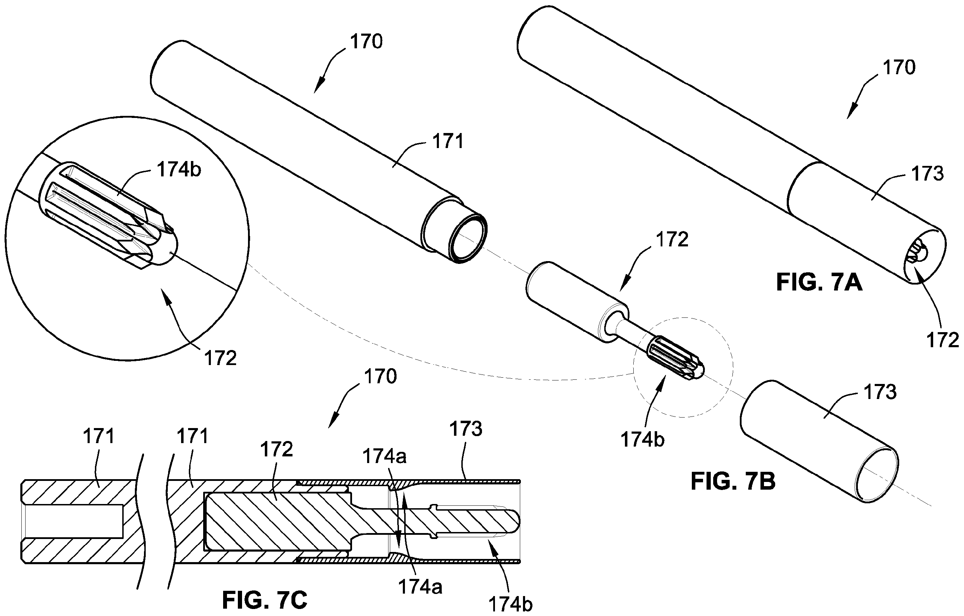

Referring to FIGS. 7A-7C, the drive shaft 170 includes a main shaft portion 171, a secondary shaft portion 172, and a sleeve portion 173 (e.g., a collar portion). The secondary shaft portion 172 is coupled to the main shaft portion 171 via an interference or press-fit connection, although, various other methods of connection are contemplated, such as, for example, a threaded connection, a welded connection, a glue connection, a monolithic connection (i.e., the main shaft portion 914a and the secondary shaft portion 914b are formed as a single unitary part), etc. The sleeve portion 173 is coupled to the main shaft portion 171via an interference or press-fit connection, although, various other methods of connection are contemplated, such as, for example, a slip on connection held in place via a set-screw (not shown), a welded connection, a glue connection, a monolithic connection (i.e., the main shaft portion 171 and the sleeve portion 173 are formed as a single unitary part), etc. As best shown in FIG. 7C, the sleeve portion 173 entirely encompassing the secondary shaft portion 172 therein such that no part of the secondary shaft portion 172 extends out of a forward opening of the sleeve portion 173. Further, the translation locking feature 174a is positioned relatively closer to the main shaft portion 171 than the rotation locking feature 174b.

The drive shaft 170 includes a translation locking feature 174a and a rotation locking feature 174b that are operable to engage with a translation locking feature and a rotation locking feature of the compounding module 300 to lock relative translation and rotation of the drive shaft 170 with the agitator 350 of the compounding module 300. The translation locking feature 174a is included in the sleeve portion 173 of the drive shaft 170 and forms an undercut or groove on an inside surface of the sleeve portion 173 of the drive shaft 170 that is sized and shaped to engage the translation locking feature of the compounding module 300. The rotation locking feature 174b of the drive shaft 170 includes a multitude of drive-shaft splines that are sized and shaped to engage the rotation locking feature of the compounding module 300.

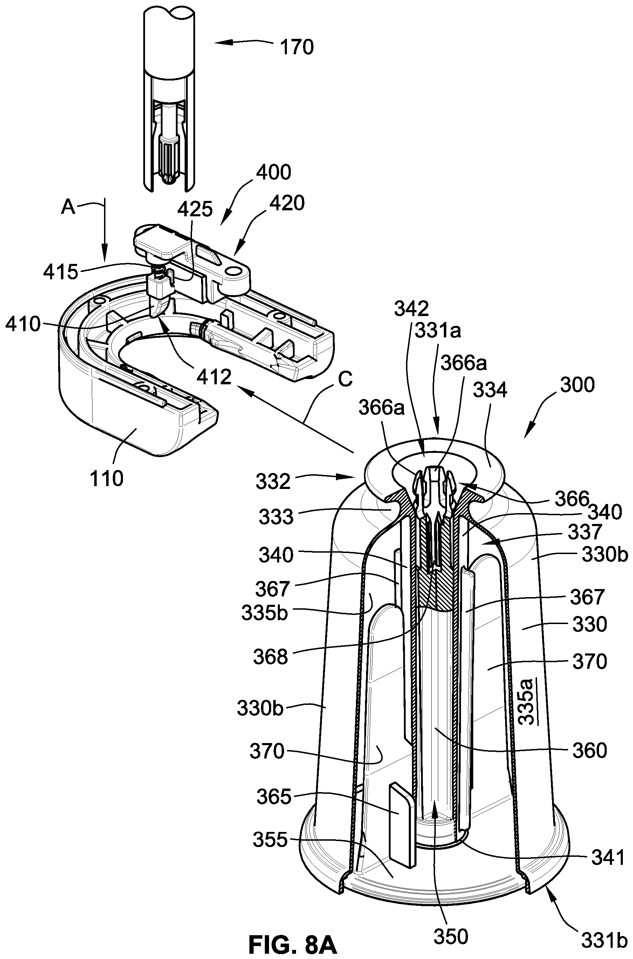

Referring generally to FIGS. 8A-8E, a method of coupling the compounding module 300 with the coupling mechanism 110 of the beverage mixing system 100 and operation of the beverage mixing system 100 (the same as, or similar to, the operation described in reference to FIGS. 1-5 above), is described with select components of the beverage mixing system 100 for illustrative purposes.

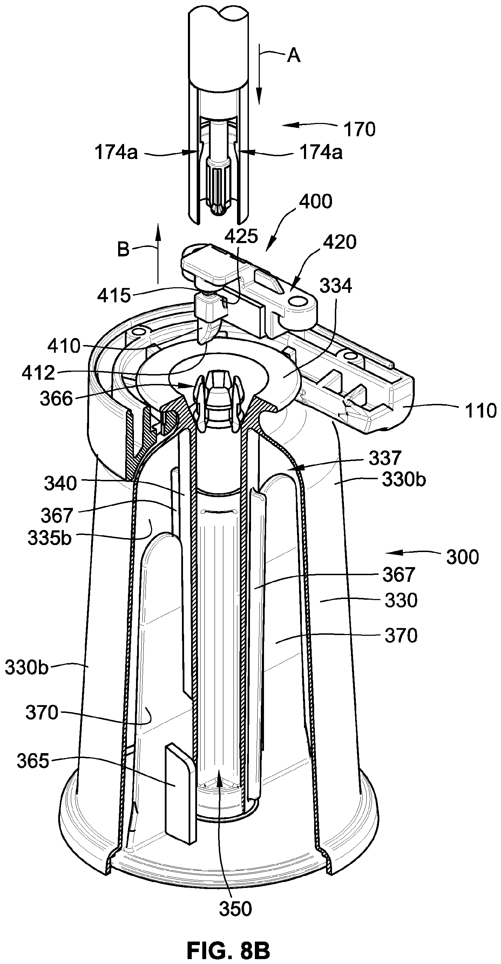

As shown in FIG. 8A, the coupling mechanism 110 is provided and ready to receive the compounding module 300 therein in the direction of arrow C. Further, a portion of the drive shaft 170 is shown in the fully retracted or first position relative to the tub 150 (tub 150 is shown in FIGS. 1-3). Also shown is a switch assembly 400 positioned relative to the coupling mechanism 110. The switch assembly 400 includes an actuator 410, a spring 415, and a body 420. The body 420 is attached to the tub 150 (tub 150 is shown in FIGS. 1-3). The spring 415 is attached to the body 420 and the actuator 410 is attached to the spring 415 such that the actuator 410 is biased in the direction of arrow A. Further, the switch assembly 400 is positioned within the beverage mixing system 100 such that a tip 412 of the actuator 410 protrudes through an aperture (not shown) in the bottom or lower portion 154 (FIG. 6A) of the main body 152 of the tub 150 adjacent to the coupling mechanism 110. As such, the tip 412 of the actuator 410 is accessible and mechanically actuable by insertion of the compounding module 300 in the coupling mechanism 110 in the direction of arrow C, as shown by a comparison of FIGS. 8A and 8B. Specifically, insertion of the compounding module 300 into the coupling mechanism 110 causes the compounding module 300 to engage the tip 412 and urge the tip 412 in the direction of arrow B (FIG. 8B). Such a movement of the tip 412 causes the actuator 410 to move correspondingly and engage a switch or button 425 of the body 420, which causes the switch assembly 400 to generate and/or transmit a signal (e.g., to a PCB of the beverage mixing system 100). Thus, the beverage mixing system 100 is configured to detect the presence of the compounding module 300 in the coupling mechanism 110 based on the generated and/or transmitted signal and can thus take or prevent certain action(s) from occurring unless a compounding module is received in the coupling mechanism 110.

For example, when a compounding module is not received in the coupling mechanism 110, the actuator 410 of the switch assembly 400 is in a first non-actuated position (FIG. 8A) where the actuator 410 is not engaging the switch 425. In such a position, in some implementations of the present disclosure, the beverage mixing system 100 is programed (e.g., via a PCB, one or more controllers, one or more processors, one or more computer chips, computer memory, etc., or any combination thereof) to prevent movement of the drive shaft 170 relative to the tub 150 and/or to prevent movement of the tub 150 relative to the housing 102. Similarly, when a compounding module is received in the coupling mechanism 110, the actuator 410 of the switch assembly 400 is in a second actuated position (FIG. 8B) where the actuator 410 does engages the switch 425. In such a position, in some implementations of the present disclosure, the beverage mixing system 100 is programed (e.g., via a PCB, one or more controllers, one or more processors, one or more computer chips, computer memory, etc., or any combination thereof) to permit movement of the drive shaft 170 relative to the tub 150 and/or to permit movement of the tub 150 relative to the housing 102.

As best shown in FIG. 8A, the compounding module 300 includes the housing 330 and the agitator 350. The housing 330 has a first end 331a and a second open end 331b. The second open end 331b separates an outer surface 335a of the housing 330 from an inner surface 335b of the housing 330. The housing 330 includes a lid portion 330a and a side wall portion 330b extending away from the lid portion 330a. The housing 330 includes a cavity 337 for storing material (not shown) therein prior to mixing the beverage. The cavity 337 is generally defined by the inner surface 335b of the housing 330 and a portion of the agitator 350.

The housing 330 further includes a coupler 332 protruding from the lid portion 330a and away from the interior cavity 337. The coupler 332 has a generally circular neck or base 333 and a generally circular head 334 connected thereto. The generally circular head 334 has a generally flat and/or smooth top. The generally circular neck or base 333 and the generally circular head 334 result in the coupler 332 being rotational-orientation agnostic during coupling of the compounding module 300 module with the coupling mechanism 110. Further, the generally circular neck or base 333 and the generally circular head 334 define an annular space that is sized and positioned to receive a portion of the coupling mechanism 110 as shown in FIG. 8B. The size and shape and orientation of the coupler 332 aids in preventing translation or any significant movement (e.g., movements other than slight wiggling) of the housing 330 relative to the coupling mechanism 110 of the beverage mixing system 100.

The housing 330 also includes a boss 340 that extends through the housing 330 from the first end 331a towards the second open end 331b. A first end of the boss 340 is integral with the lid portion 330a of the housing 330. The boss 340 defines an inner bore 342 that extends the entire length of the boss 340 and through the coupler 332. The boss 340 includes a terminus or end 341 that points toward the second open end 331b of the housing 330.

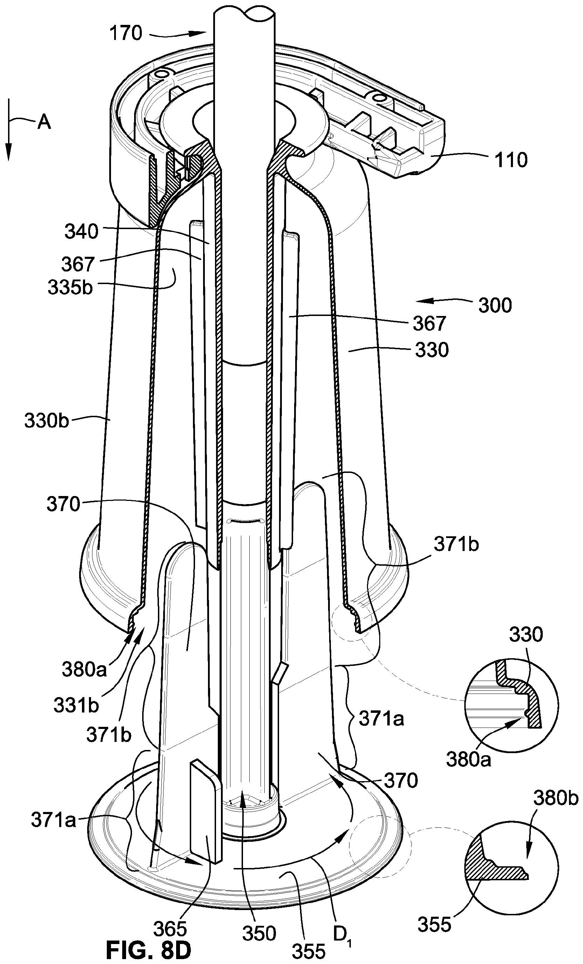

The agitator 350 of the compounding module 300 has a base 355, a shaft 360, and mixing elements 370. The shaft 360 and the mixing elements 370 extend generally perpendicular from the base 355. Each of the mixing elements 370 is in the form of a blade having a fin-like shape; however, any shape for the mixing elements 370 is contemplated (e.g., square shape, triangular shape, semi-circular shape, etc.). As best shown in FIG. 8D, each of the mixing elements 370 has a first portion 371a having a first width and a second portion 371b having a second width that is smaller than the first width. The first portions 371a of the mixing elements 370 are directly attached to the base 355 of the agitator 350 and the second portions 371b of the mixing elements 370 are spaced from the base 355 of the agitator 350. As described in further detail below, the varying width of the mixing elements 370 allow the mixing elements 370 to rotate without engaging a pair of flanges 367 of the boss 340 of the housing 330 when in the fully extended position (FIG. 8D) and further to engage the pair of flanges 367 of the boss 340 of the housing 330 when in the partially extended position (8E). Additional, while two blades are shown, any number of blades can be included, such as, for example, one blade, three blades, four blades, five blades, ten blades, etc. The agitator 350 further includes respective support elements 365 coupled to the base 355 and the mixing elements 370 that aid in providing structural rigidity to the mixing elements 370. As best shown in FIGS. 8D and 8E, the support elements 365 extends from the base 355 in a manner such that the support elements 365 are perpendicular to respective the mixing elements 370.

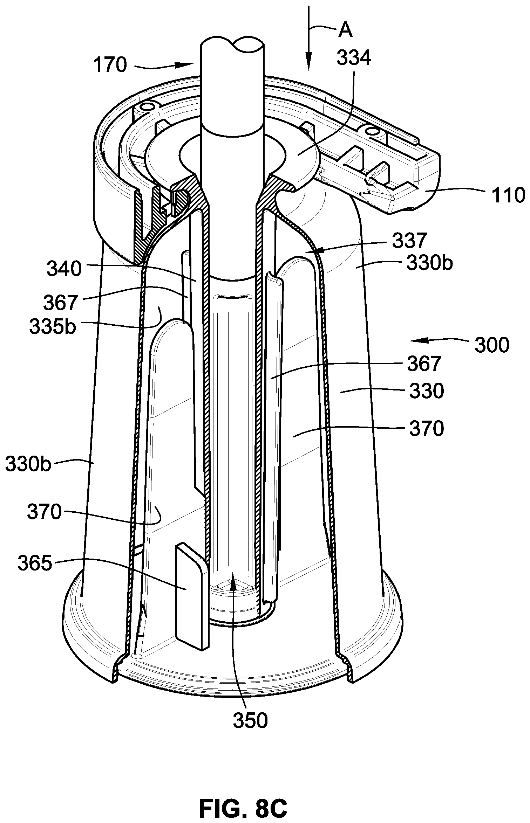

As is evident from a comparison of FIGS. 8C and 8D, the shaft 360 of the agitator 350 is slidably coupled to the boss 340 of the housing 330 such that the agitator 350 can translate from a sealed position (FIGS. 8A-8C) to an unsealed position (FIG. 8D). When the agitator 350 is in the sealed position, a sealing feature 380a,b (FIG. 8D) of the compounding module 300 circumferentially seals the cavity 337 of the housing 330, thereby protecting the material (not shown) contained therein. The sealing feature 380a,b includes a first sealing feature 380a that is integral with the housing 330 and a second sealing feature 380b that is integral with the base 355 of the agitator 350. As best shown in FIG. 8D, the first sealing feature 380a includes a circumferentially extending bead or protrusion at the second open end 331b of the housing 330 and the second sealing feature 380b includes a circumferentially extending edge or lip about an outer portion of the base 355 of the agitator 350. As such, when the agitator 350 is in the sealed position (FIGS. 8A-8C), the edge or lip of the second sealing feature 380b on the base 355 engages with the bead or protrusion of the first sealing feature 380a on the housing 330 to seal the cavity 337.

In some implementations, an initial sealing of the sealing features 380a,b requires the base 355 to flex and/or deform under a first sealing force. Further, once sealed, an unsealing or decoupling force is required to separate the agitator 350 from the housing 330. Similarly, once unsealed, the first sealing force or a similar resealing force is required to reseal and recouple the agitator 350 with the housing 330 prior to discarding the compounding module 300 after use with the beverage mixing system 100. As the drive shaft 170 is coupled to the agitator 350, it is the drive shaft 170 that imparts the unsealing and resealing forces to the agitator 350 and/or the housing 330.

The shaft 360 of the agitator 350 includes a translation locking feature or collet 366 and a rotation locking feature 368, which shown in FIG. 8A. The rotation locking feature 368 includes a multitude of agitator splines that define a multitude of agitator channels therebetween that are sized and shaped to non-rotationally engage with the corresponding drive-shaft splines of the rotation locking feature 174b (FIG. 7B) of the drive shaft 170. The collet 366 includes a multitude of deflectable or bendable fingers 366a. Each of the fingers 366a is generally straight (e.g., angle of zero with respect to vertical) and includes a hammer head-like member or a locking tab at an end thereof. The locking tabs are sized and shaped to engage with the corresponding translation locking feature 174a (FIG. 7C) of the drive shaft 170.

Referring to FIG. 8C, the compounding module 300 is shown in engagement with the coupling mechanism 110, the drive shaft 170 is shown as engaged with the agitator 350 of the compounding module 300, and the switch assembly 400 is removed for ease of illustration. Specifically, the drive shaft 170 is translationally engaged and rotationally engaged with the agitator 350 via the cooperating translation locking features 174a/366a and the cooperating rotation locking features 174b/368. As such, movement of the drive shaft 170 in the direction of arrow A from the position shown in FIG. 8C to the position shown in FIG. 8D (e.g., the fully extended position) causes the agitator 350 to unseal from the housing 330 and translate in the direction of arrow A relative to the boss 340 in a slidable manner. With the agitator 350 so positioned (FIG. 8D), the agitator motor 195 can be actuated (e.g, turned on) to cause the drive shaft 170 to rotate, which causes the agitator 350 to rotate relative to the housing 330 and the coupling mechanism 110 in the direction of arrows Di. In some implementations, the agitator motor 195 can also rotate in a reverse direction to cause the agitator 350 to rotate in a direction opposite of the direction of arrows Di.

As shown generally in FIGS. 8C-8E, during operation of the beverage mixing system 100, the drive shaft 170 is isolated from encroachment by any fluid in the vessel 10 and any material in the cavity 337 of the compounding module 300. Specifically, while the compounding module 300 relies on the drive shaft 170 to impart rotation and/or translation to the agitator 350, the compounding module 300 protects the drive shaft 170 from becoming contaminated by the fluid and/or the material during the mixing operation. Specifically, the drive shaft 170 is isolated by a mechanical seal that is established between the inner bore 342 of the boss 340 and the shaft 360 of the agitator 350, which prevents encroachment by the fluid and/or the material towards the drive shaft 170.

As described above, after rotation of the agitator 350 (FIG. 8D), in some implementations during operation of the beverage mixing system 100, the beverage mixing system 100 conducts a spin-cycle to aid in the removal of residue and/or fluid on the housing 330 and/or the agitator 350 of the compounding module 300. In such implementations, once the beverage is mixed, the agitator motor 195 stops rotating the drive shaft 170. Then the drive shaft 170 is raised relative to the housing 330 (via the motor plate 175, the motor-plate motor 185, the motor-plate leadscrew 162, the motor-plate-leadscrew threaded bearing 167, etc.) to the third or partially extended position relative to the tub 150 (FIGS. 5 and 8E) in the direction of arrow B. With the beverage mixing system 100 positioned as shown in FIGS. 5 and 8E, the spin-cycle is conducted by rotating the drive shaft 170 via the agitator motor 195. As best shown in FIG. 8E, the rotation of the drive shaft 170 (when positioned as shown in FIGS. 5 and 8E) causes the agitator 350 to spin and engage a portion of the housing 330, which results in the housing 330 also spinning relative to the coupling mechanism 110 and the housing 102. Specifically, the rotation of the drive shaft 170 causes the first portions 371a of the mixing elements 370 to engage and push respective portions of the pair of flanges 367 of the boss 340 of the housing 330. It is this engagement/pushing that causes the housing 330 to rotate relative to the coupling mechanism 110 and the housing 102 in the direction of arrows D₂ (e.g., which is the same rotational direction as the arrows Di).

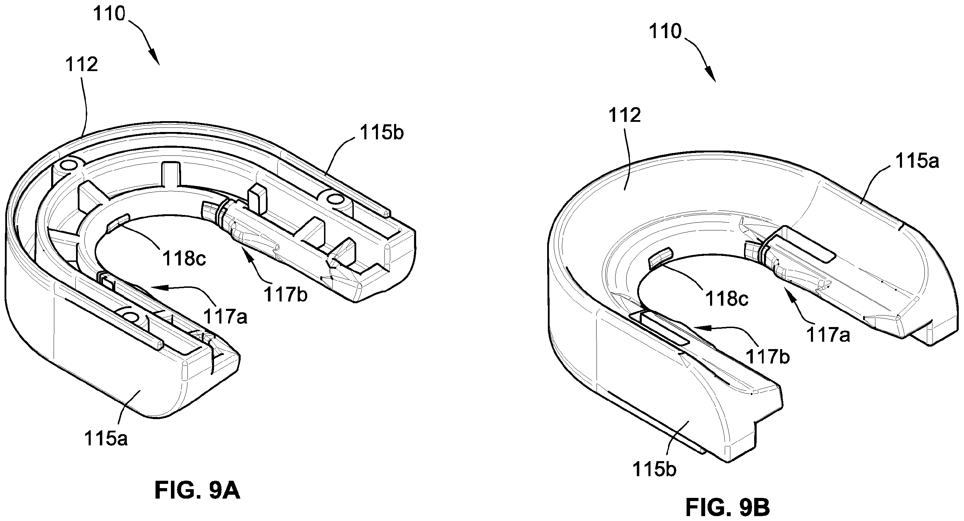

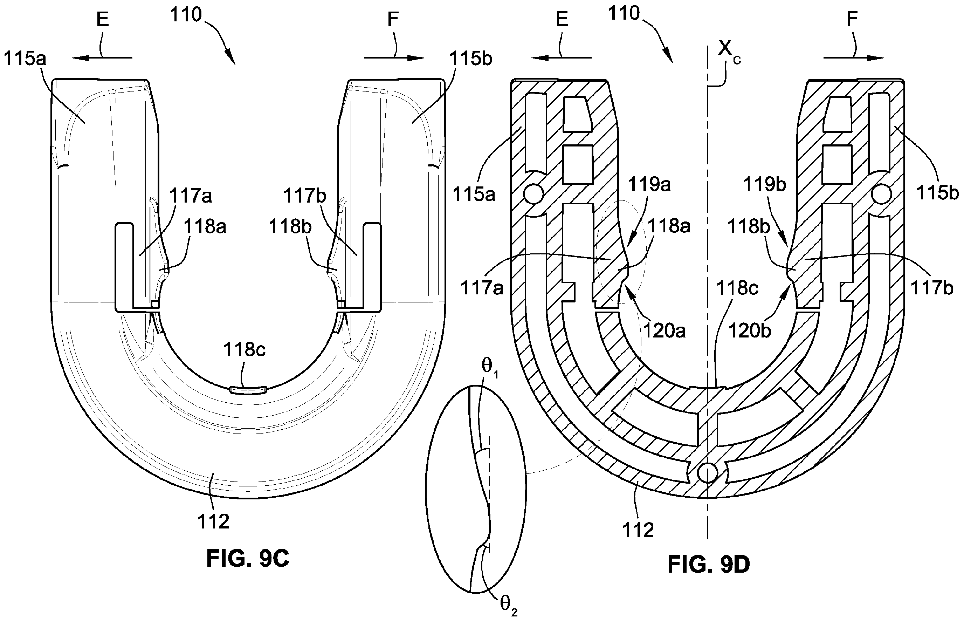

Generally referring to FIGS. 9A-9D, the coupling mechanism 110 of the beverage mixing system 100 is shown. The coupling mechanism 110 includes a body 112 and a pair of arms 115a, 115b extending from the body 112 such that the coupling mechanism 110 has a generally U-shaped configuration to form a collar, which is best shown in FIGS 9C and 9D. The first one of the pair of arms 115a includes a first deflectable tab or cantilever beam 117a that is configured to deflect in a first direction (e.g., the direction of arrow E). Similarly, the second one of the pair of arms 115b includes a second deflectable tab or cantilever beam 117b that is configured to deflect in an opposing second direction (e.g., the direction of arrow F). During use of the beverage mixing system 100, the deflectable tabs 117a, 117b deflect upon insertion of the compounding module 300 into the coupling mechanism 110 and upon removal of the compounding module 300 from the coupling mechanism 110.

As best shown in FIGS. 9C and 9D, the first deflectable tab 117a includes a first protrusion 118a and the second deflectable tab 117b includes a second protrusion 118b. The first protrusion 118a extends towards the second deflectable tab 117b in the direction of arrow F and the second protrusion 118b extends towards the first deflectable tab 117a in the direction of arrow E. In addition to the first and the second protrusion 118a, 118b, the body 112 of the coupling mechanism 110 includes a third protrusion 118c. The first, the second, and third protrusions 118a, 118b, and 188c are size, shaped, and arranged to collectively provide a three-point support contact with the coupler 332 of the housing 330 of the compounding module 300. Specifically, each of the first, the second, and third protrusions 118a, 118b, and 188c directly engages a portion of the generally circular neck or base 333 of the coupler 332. The coupling mechanism 110 forms a collar having a ridge that conforms with a corresponding flange on the compounding module 300 to stabilize the module 300 while it is spinning rapidly. Unintended wobbling by the compounding module 300 is suppressed or eliminated, and the compounding module 300 stays securely inside the collar area of the coupling mechanism 110 during spinning. Shoulders around the neck of the compounding module 300 when inserted into the collar of the coupling mechanism 110 further operate to stabilize the compounding module 300 during spinning.

As best shown in FIG. 9D, the first protrusion 118a includes a first outwardly tapered ramp surface 119a that leads directly into a first inwardly tapered ramp surface 120a. Similarly, the second protrusion 118b includes a second outwardly tapered ramp surface 119b that leads directly into a second inwardly tapered ramp surface 120b. The first and the second outwardly tapered ramp surfaces 119a, 119b are at a first angle θ₁ with respect to a central axis Xc of the coupling mechanism 110 and the first and the second inwardly tapered ramp surfaces 120a, 120b are at a second angle θ₂ with respect to the central axis Xc of the coupling mechanism 110. As shown, the second angle θ₂ is greater than the first angle θ₁ such that a decoupling force of the compounding module 300 from an engagement with the coupling mechanism 110 is larger than a coupling force of the compounding module 300 into an engagement with the coupling mechanism 110. Various angles for θ₁ and θ₂ are contemplated.

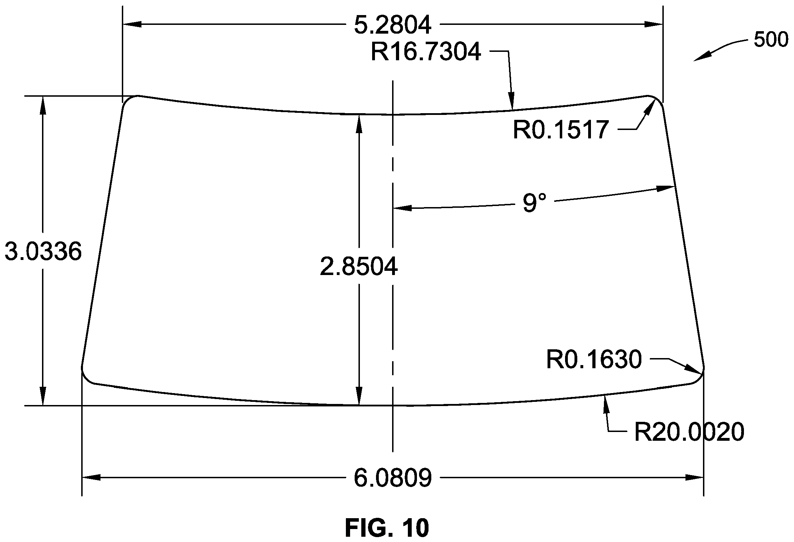

FIG. 10 shows a plan view of a flexible substrate 500, such as a label or a sticker bearing indicia, which can be applied to any of the compounding modules disclosed herein (e.g., compounding module 300), according to an aspect of the present disclosure. In some implementations, the compounding modules have a tapered conical form in which the base flares or tapers outwardly compared to the top of the compounding module. As such, applying to the exterior surface of the compounding module a flexible substrate 500 bearing indicia requires that flexible substrate have two different radii and angled side edges as shown in FIG. 10 so that when wrapped around the outer circumferential surface (which bears a tapered conical form) of the compounding module, the top and bottom edges of the flexible substrate 500 are parallel and the two end edges of the flexible substrate 500 are parallel. As can be seen in FIG. 10, the top and bottom edges have two different radii. The top edge has a radius of approximately 29.7 inches, whereas the bottom edge has a larger radius of approximately 35.5 inches, corresponding to a ratio of approximately 0.84:1. The radius of the bottom edge is a function of the height of the side ends, which height in this example is about 5 inches. Thus, in other implementations, the ratio between the radius of the top edge relative to the radius of the bottom edge can be between 0.75:1 to 0.95:1, or between 0.80:1 to 0.9:1, or between 0.82:1 to 0.86:1. The overall height of the substrate 500 in the example shown is about 5.4 inches taken from its highest point to the lowest point when completely unfurled or unfolded or flattened, resulting in a wrapped-unwrapped height ratio of 1:1.08. This ratio is specific to the measurements shown in FIG. 10, but in other implementations, the ratio between the wrapped height to the unwrapped height can be between 1:1.02, or between 1:1.03, or between 1:1.04, or between 1:1.05, or between 1:1.06, or between 1:1.07, or between 1:1.09, or between 1:1.1, or between 1:1.11, or between 1:1.12, or between 1:1.13.

The two side ends are also angled with respect to a vertical line running through the center of the substrate 500 as shown in FIG. 10, and in this example, they form approximately a 9 degree angle with respect to vertical. In other implementations, depending on the height of the substrate 500, the side ends can form any angle between 6-18 degrees, or between 7-15 degrees, or between 8-12 degrees. The edges where a side end transitions to an edge can be rounded, such as shown, or can intersect to form a sharp edge. When applying the radii ratios and side end angle disclosed herein to a substrate 500 that is wrapped around a compounding module having a tapered conical form, the edges of the substrate 500 will be parallel to one another, and the ends will be parallel to one another. One end can overlap slightly the other end when fully wrapped around the compounding module. An RFID chip, an antenna, or a flexible circuit board can be embedded or incorporated in or affixed or coupled to the substrate 500 so that the chip, antenna, or board is sandwiched between an outer exposed surface of the substrate 500 and the outer surface of the compounding module to which the substrate 500 is applied. In some implementations, the substrate 500 can be a sticker, or the substrate 500 can be magnetically coupled to the compounding module, or the substrate 500 can be electrostatically coupled to the compounding module, or the substrate 500 can be applied to the compounding module by a heat-shrink process. The substrate 500 and any compounding module disclosed herein can be composed of paper, plastic or plastic polymer, fiber, vegetable or grain (e.g., corn, rice), metal, or any other material that imparts flexibility to the substrate. In some implementations, the substrate 500, including any indicia borne thereon, is made from a biodegradable material. The chip, antenna, or board can be used to communicate information between the compounding module and the beverage mixing system 100 or for authentication or user identification purposes, as described herein, including in the related application disclosed in International Patent Application No. PCT/US2015/017142, the entire content of which is incorporated by reference herein.

According to some implementations of the present disclosure, the beverage mixing system 100 can be configured to sense an overcurrent condition in the tub motor 145, the motor-plate motor 185, or both, when any or both motors 145, 185 are drawing or demanding too much electrical current that exceeds a threshold current draw for a predetermined period of time, such as any period of time between 0.1 seconds to 3 seconds following the initial sensing of the overcurrent condition. When the threshold condition is satisfied or exceeded, a controller of the beverage mixing system 100 is configured to prevent all movement of the tub 150 (and the coupling mechanism 110 attached thereto) or downward movement of the tub 150. Alternately, or additionally, the controller can be configured to prevent the drive shaft 170 from any movement, or to prevent downward movement of the drive shaft 170. Due to the downward force applied by the drive shaft 170 to the agitator 350 of the compounding module 300 received in the coupling mechanism 110, e.g., 20-50 lbs., injury could occur to the human operator if a hand or finger should coincide with the movement path of the drive shaft 170, the tub 150, the coupling mechanism 110, the agitator 350, the housing 330, or any combination thereof.

Alternately, if a foreign object is introduced in the movement path of the drive shaft 170, the tub 150, the coupling mechanism 110, the agitator 350, the housing 330, or any combination thereof during operation of the beverage mixing system 100 or if the vessel 10 (e.g., a glass vessel) has not been properly installed under the tub 150 in the beverage mixing system 100, the controller can be configured to stop the downward movement and optionally retract the drive shaft 170 and/or the tub 150 (and the coupling mechanism 110 attached to the tub 150 and the compounding module 300 received in the coupling mechanism 110). Depending on the position of a foreign object between the vessel 10 and the tub 150 and/or the compounding module 300, the continued downward force applied by the drive shaft 170 and/or the tub 150 to the foreign object can cause the vessel 10 to shatter. Because a relatively significant amount of downward force can be applied by the beverage mixing system 100, overcurrent sensing offers a safety mechanism to avoid operator injury or shattering or cracking the vessel 10 placed under the drive shaft 170 and/or the tub 150.

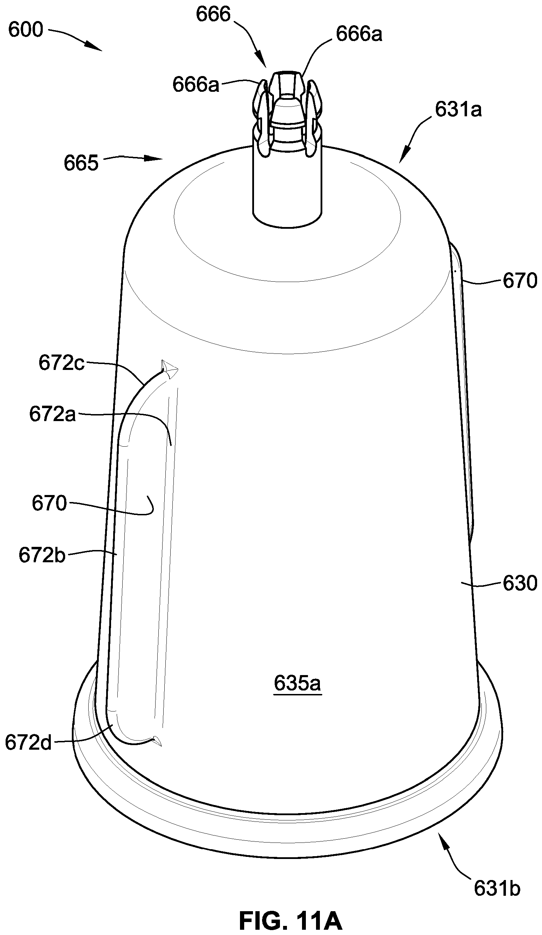

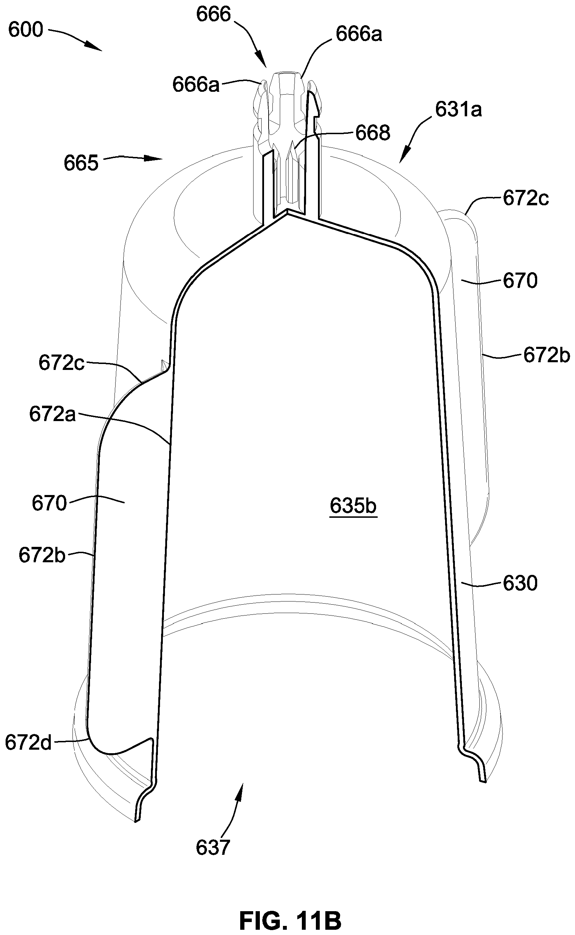

Referring now to FIG. 11A and FIG. 11B, a compounding module 600 is similar to compounding module 300, but compounding module 600 does not include an agitator slidably coupled to an internal bore that engages with the drive shaft 170 of the beverage mixing system 100. Rather, in lieu of including an agitator (e.g., agitator 350), compounding module 600 includes one or more mixing elements 670 extending outwardly from the compounding module 600. As shown in FIG. 11A and FIG. 11B, compounding module 600 includes a housing 630 with a first closed end 631a and a second opposing open end 631b. The second open end 631b separates an outer surface 635a from an inner surface 635b of the housing 630. The housing 630 defines an interior cavity 637 for storing material therein prior to mixing the beverage. The interior cavity 637 is generally defined by the inner surface 635b of the housing 630.

The compounding module 600 includes a coupling stem 665 that is fixed (e.g., non-rotationally and non-translationally attached) to the first end 631a of the housing 630 and extends away from the outer surface 635a of the housing 630. The coupling stem 665 of the compounding module 600 is configured to be engaged by the drive shaft 170 of the beverage mixing system 100 in the same, or similar, manner as the agitator 350 described above. Coupling stem 665 may be integral with the housing 630 (e.g., coupling stem 665 and housing 630 are formed as a single monolithic part). Coupling stem 665 may also be coupled with housing 630 via a variety of connections, such as a threaded connection, a welded connection, a glue connection, etc. The coupling stem 665 includes a translation locking feature or collet 666 disposed at an end of the coupling stem 665 opposite the first end 631a of the housing 630, and includes a multitude of deflectable or bendable fingers 666a that are the same as, or similar to, fingers 366a. Each of the fingers 666a is generally straight (e.g., angle of zero with respect to vertical) and includes a hammer head-like member or a locking tab at an end thereof. The locking tabs are sized and shaped to non-translationally engage with the corresponding translation locking feature 174a (FIG. 7C) of the drive shaft 170.

As shown in FIG. 11B, the coupling stem 665 also includes a rotation locking feature 668 disposed within an interior bore of the coupling stem 665. The rotation locking feature 668 includes a multitude of agitator splines that define a multitude of agitator channels therebetween that are sized and shaped to non-rotationally engage with the corresponding drive-shaft splines of the rotation locking feature 174b (FIG. 7B) of the drive shaft 170. In some implementations, the housing 630 does not include a coupler that is configured to engage with the coupling mechanism 110 of the beverage mixing system. Instead, the drive shaft 170 is configured to engage with the coupling stem 665 to secure the compounding module 600 to the beverage mixing system 100 prior to use. In other implementations however, the housing 630 includes a coupler (not shown) configured to engage with the coupling mechanism 110 of the beverage mixing system 100.

The housing 630 of compounding module 600 generally includes one or more mixing elements 670 extending from the outer surface 635a of the housing 630. The mixing elements 670 may be monolithically connected to the housing 630 (i.e. mixing elements 670 and housing 630 are formed as a single unitary part). Mixing elements 670 may also be connected to housing 630 via a variety of other connections, such as a threaded connection, a welded connection, a glue connection, etc. As shown in FIG. 11A, the compounding module 600 may include two mixing elements disposed about 180 degrees apart from each other along the outer surface 635a of the housing 630 (e.g., on opposite sides of the housing 630). In another implementation, the compounding module 600 can include four mixing elements with each mixing element disposed about 90 degrees apart from adjacent mixing elements along the outer surface 635a of the housing 630. In a further embodiment, the compounding module 600 can include three mixing elements, each disposed about 120 degrees apart from adjacent mixing elements along the outer surface 635a of the housing 630. In the implementation of compounding module 600 shown in FIG. 11A and FIG. 11B, each of the mixing elements 670 are disposed generally between the first end 631a and the second open end 631b of the compounding module 600.

The mixing elements 670 can have a generally trapezoidal shape, a generally rectangular shape, a generally square shape, a generally polygonal shape, or an irregular shape. The mixing elements 670 may be coupled to the housing 630 along a first edge 672a, while a second opposing edge 672b is spaced apart from and unconnected to the housing 630. First edge 672a and second edge 672b can be generally parallel and form the bases of the trapezoidal shape. The first edge 672a and the second edge 672b are connected via third edge 672c and fourth edge 672d, which form the legs of the trapezoidal shape. The third edge 672c and the fourth edge 672d can be curved as shown. In other implementations, third edge 672c and/or fourth edge 672d are straight. In some implementations, the mixing elements 670 can have a generally rectangular shape. In these implementations, third edge 672c and fourth edge 672d are generally parallel to each other and horizontal.

The second opposing edge 672b of the mixing elements 670 is generally disposed at an angle relative to a vertical axis connecting the first end 631a and the second open end 631b. The angle of the second opposing edge 672b of the mixing elements 670 can be between about 0 degrees and about 20 degrees, between about 0 degrees and about 15 degrees, between about 5 degrees and about 10 degrees, or about 6 degrees. The first edge 672a and the second edge 672b may have a length of greater than about 0 mm and less than about 100.0 mm, between about 25.0 mm and about 75.0 mm, between about 30.0 mm and about 60.0 mm, or about 5.0 mm. The third edge 672c and the fourth edge 672d of the mixing elements 670 may have a length of greater than about 0 mm and less than about 20.0 mm, between about 5.0 mm and about 15.0 mm, about 10.0 mm, or about 5.0 mm. The length of the third edge 672c and the fourth edge 672d can also be defined as the length between the first edge 672a and the second edge 672b.

In one implementation, compounding module 600 includes two mixing elements, each mixing element having a trapezoidal shape. The first and second edges of the mixing elements have a length of about 50.0 mm, while the third and fourth edges have a length of about 10.0 mm. The second edge of each mixing element is disposed at an angle of about 6 degrees. The mixing elements are generally disposed on opposite sides of the housing 630. In another implementation, compounding module 600 includes two mixing elements. Each mixing element has a trapezoidal shape with dimensions of about 5.0 mm by about 50.0 mm, and the second opposing edge 672b of each mixing element is disposed at an angle of about 6 degrees. The mixing elements are generally disposed on opposite sides of the housing 630.

During operation, compounding module 600 works with the rest of the beverage mixing system 100 in a similar manner as compounding module 300. In some implementations, compounding module 600 is coupled to the beverage mixing system 100 via engagement between the drive shaft 170 and the coupling stem 665. When this occurs, the translation locking feature 174a of the drive shaft 170 engages with the translation locking features 666a of the coupling stem 665 in a similar manner as the engagement between the translation locking feature 174a and the translation locking feature 366 of the compounding module 300. The rotation locking feature 174b is configured to engage with rotation locking feature 668 of coupling stem 665 in a similar manner as the engagement between the rotation locking feature 174b and the rotation locking feature 368 of compounding module 300. The cooperating translation locking features 174a/666 and the cooperating rotation locking features 174b/668 lock relative translation and rotation between the drive shaft 170 and the coupling stem 665. Because the coupling stem 665 is non-rotationally and non-translationally coupled to the housing 630 of the compounding module 600, translational and rotational movement of the drive shaft 170 causes corresponding translational and rotational movement of the compounding module 600.

As described above, during operation of the beverage mixing system 100, in response to an input to begin a mixing cycle (e.g., receiving an input via the control panel assembly 200), the tub 150 is lowered from the first position (FIGS. 2 and 6B-6C) to the second position (FIG. 3), which causes the compounding module 600 to be moved correspondingly (similar to compounding module 300 as shown in FIG. 3). Further in response to the input, with the compounding module 600 so positioned, the motor plate 175 is lowered (via the motor-plate motor 185, the motor-plate leadscrew 162, the motor-plate-leadscrew threaded bearing 167, etc.) from a first position (FIG. 3) to a second position (FIG. 4) in the direction of arrow A. As such, the drive shaft 170, which is coupled to the motor plate 175, is moved from a first or fully retracted position relative to the tub 150 (FIGS. 2 and 3) to a second or fully extended position relative to the tub 150 (FIG. 4) in the direction of arrow A. As the drive shaft 170 is engaged with the coupling stem 665 of the compounding module 600, this movement of the drive shaft 170 causes the compounding module 600 to move in the direction of arrow A relative to the beverage mixing system 100 and to be at least partially disposed within vessel 10, similar to compounding module 300 in FIG. 4. Once the compounding module 600 is at least partially disposed within the vessel, the material stored in the interior cavity 637 of the compounding module is caused to be emptied into the vessel.

With the compounding module 600 so positioned, the agitator motor 195 is actuated to cause the drive shaft 170 to rotate, which causes the compounding module 600 to rotate. During mixing, the drive shaft 170 can spin at a rate of between about 650-750 rpms (revolutions per minute), whereas during spinning, the drive shaft can spin at a higher rate, such as between about 950-1050 rpms. In some implementations, spinning the drive shaft at too high a rate can cause the liquid being mixed, particularly lighter or low viscosity liquids, to begin to splash upwards onto the machine. The rotation of the compounding module 600 causes the mixing elements 670 to agitate the fluid in the vessel 10, to thereby mix the fluid and the material.

After rotation of the compounding module 600, in some implementations during operation of the beverage mixing system 100, the beverage mixing system 100 conducts a spin-cycle to aid in the removal of residue and/or fluid on the housing 630 of the compounding module 600. In such implementations, once the beverage is mixed, the agitator motor 195 stops rotating the drive shaft 170. Then the tub 150 and the motor plate 175 are raised either at the same time, one after the other, or some combination thereof to the positions shown in FIG. 5 (as compared with FIG. 4). Specifically, the motor plate 175 is raised (via the motor-plate motor 185, the motor-plate leadscrew 162, the motor-plate-leadscrew threaded bearing 167, etc.) from the second position (FIG. 4) to a third position (FIG. 5) in the direction of arrow B. As such, the drive shaft 170, which is coupled to the motor plate 175, is moved from the second or fully extended position relative to the tub 150 (FIG. 4) to a third or partially extended position relative to the tub 150 (FIG. 5) in the direction of arrow B. This movement of the drive shaft 170 causes the compounding module 600 to slide in the direction of arrow B relative to the beverage mixing system 100. Similarly, the tub 150 is raised (via the tub motor 145, the tub leadscrew 160, the tub-leadscrew threaded bearing 165, etc.) from the second position (FIGS. 3 and 4) to a third position (FIG. 5) in the direction of arrow B. As such, the compounding module 600 is moved from the second position or the fully extended or operational position (FIGS. 3 and 4) to a third position or a partially extended or spin-cycle position (FIG. 5) in the direction of arrow B. With the beverage mixing system 100 positioned as shown in FIG. 5, the spin-cycle is conducted by rotating the drive shaft 170 via the agitator motor 195. This rotation thus causes the compounding module 600 to rotate.

Various other implementations of the compounding module can also be used with beverage mixing system 100. Generally, the different implementations of the compounding module are structured similar to compounding module 600 and operate in generally the same fashion. However, the different implementations of the compounding module can have the one or more mixing elements disposed in different arrangements to produce different flow patterns when in use.

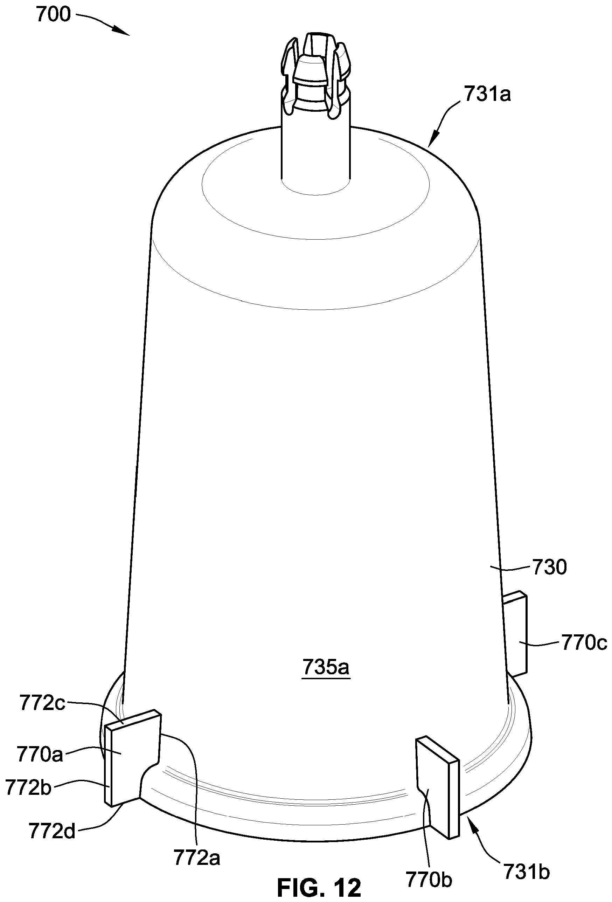

Referring now to FIG. 12, a compounding module 700 is structured similarly to compounding module 600, but includes mixing elements 770, which in FIG. 12 include mixing elements 770a, 770b, and 770c. As shown with reference to mixing element 770a, the mixing elements 770 are generally square-shaped and coupled to the housing 730 along a first edge 772a, while a second opposing edge 772b is spaced apart from and unconnected to the housing 730. The mixing elements 770 can also have a generally trapezoidal shape, a generally rectangular shape, a generally square shape, a generally polygonal shape, or an irregular shape. The first edge 772a and the second edge 772b are connected at one end via third edge 772c. Third edge 772c can be a generally straight edge and can be disposed generally parallel to the horizontal plane defined by the second open end 731b of the housing 730, or can be at an angle thereto. In other implementations, third edge 772c is curved. The first edge 772a and the second edge 772b are connected at the other end via fourth edge 772d. As shown in FIG. 12, fourth edge 772d generally includes a straight portion and a curved portion. In other implementations, fourth edge 772d can be completely straight, or can be completely curved. The mixing elements 770 of compounding module 700 are generally disposed along the housing 730 nearer to the second open end 731b of the housing 730 than the first end 731a of the housing 730.

In the implementation shown in FIG. 12, compounding module 700 generally includes a fourth mixing element 770d, which is not shown. In this implementation, the mixing elements 770a-d may be disposed about 90 degrees apart from adjacent mixing elements along an outer surface 735a of the housing 730. In another implementation, compounding module 700 includes two mixing elements 770a and 770b that are disposed about 180 degrees apart from adjacent mixing elements along the outer surface 735a of the housing 730. In yet another implementation, compounding module 700 includes three mixing elements 770a-c, each disposed about 120 degrees apart from adjacent mixing elements along the outer surface 735a of the housing 730.

The second opposing edge 772b of the mixing elements 770 is generally disposed at an angle relative to a vertical axis connecting the first end 731a and the second open end 731b. The angle of the second opposing edge 772b of the mixing elements 770 can be between about 0 degrees and about 20 degrees, between about 0 degrees and about 15 degrees, between about 0 degrees and about 10 degrees, between about 0 degrees and about 5 degrees, or about 0 degrees. The first edge 772a and the second edge 772b may have a length of greater than about 0 mm and less than about 20.0 mm, between about 5 mm and about 15 mm, about 10 mm, or about 12.7 mm. The third edge 772c and the fourth edge 672d may have a length of between about 0 mm and about 15 mm, between about 5 mm and about 10 mm, or about 6.3 mm. The length of the third edge 772c and the fourth edge 772d can also be defined as the distance between the first edge 772a and the second edge 772b.

In one implementation, compounding module 700 includes two mixing elements. Each mixing element has a rectangular shape with dimensions of about 6.3 mm by about 12.7 mm, and is disposed at an angle of 0 degrees with respect to the vertical axis connecting the first end 731a and the second open end 731b. The mixing elements are generally disposed about 180 degrees apart from each other along the outer surface 735a of the housing 730 (e.g., on opposite sides of the housing 730). In another implementation, compounding module 700 includes four mixing elements. Each mixing element has a rectangular shape with dimensions of about 6.3 mm by about 12.77 mm, and is disposed at an angle of 0 degrees with respect to the axis connecting the first end 731a and the second open end 731b. Each mixing element is disposed about 90 degrees apart from adjacent mixing elements along the outer surface 735a of the housing 730.

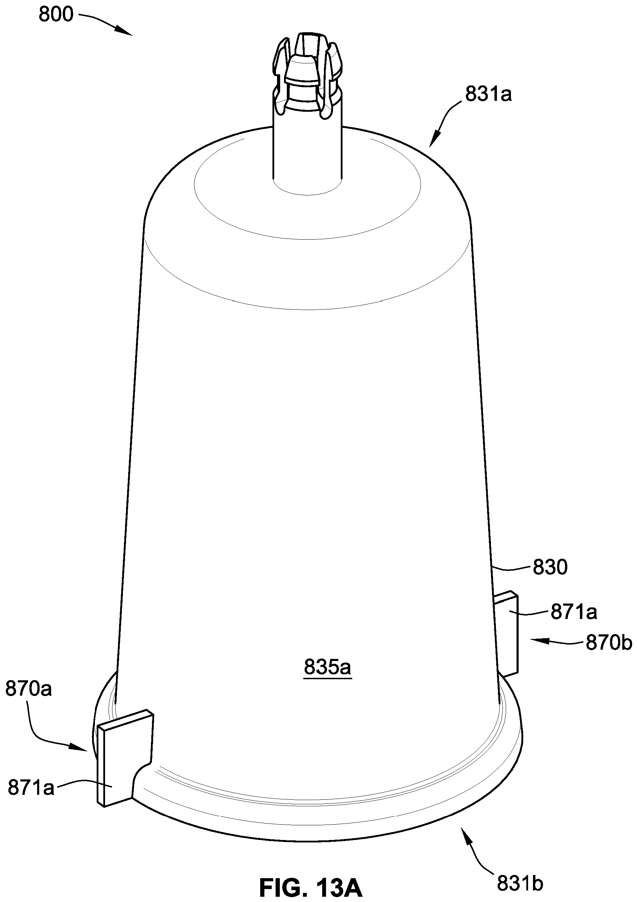

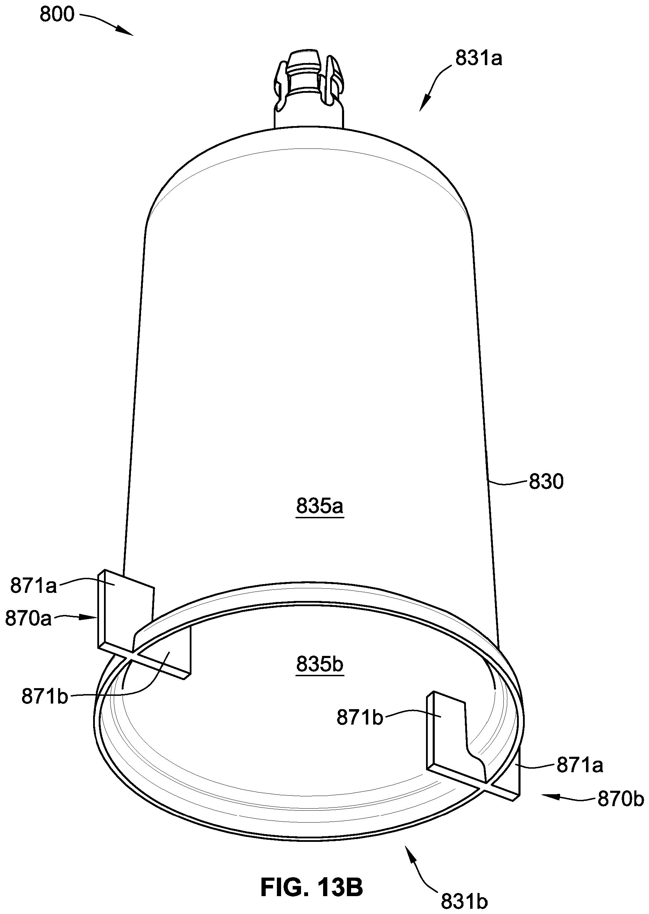

Referring now to FIGS. 13A and 13B, a compounding module 800 includes mixing elements 870a and 870b that include exterior portions 871a and interior portions 871b. Exterior portions 871a extend outwardly from outer surface 835a of housing 830, while interior portions 871b extend inwardly from inner surface 835b of housing 830. As shown, the exterior portions 871a and the interior portions 871b generally extend from the outer surface 835a and inner surface 835b respectively at corresponding locations such that the exterior portions 871a and the interior portions 871b of each of the mixing elements 870 are disposed on opposite sides of a wall of the housing. In other implementations, the locations of the exterior portions 871a and the interior portions 871b do not correspond, such that the exterior portions 871a and the interior portions 871b of each of the mixing elements are not disposed on opposite sides of a wall of the housing.

Mixing elements 870a and 870b can have a size and shape similar to that of mixing elements 770a-c in FIG. 12. In the implementation of FIGS. 13A and 13B, the mixing elements 870a and 870b are disposed about 180 degrees apart from each other along the outer surface 835a of the housing 830. In another implementation, compounding module 800 includes four mixing elements 870a-870d that are disposed about 90 degrees apart from adjacent mixing elements along the outer surface 835a of the housing 830. In yet another implementation, compounding module 800 includes three mixing elements 870a-c, each disposed about 120 degrees apart from adjacent mixing elements along the outer surface 835a of the housing 830.

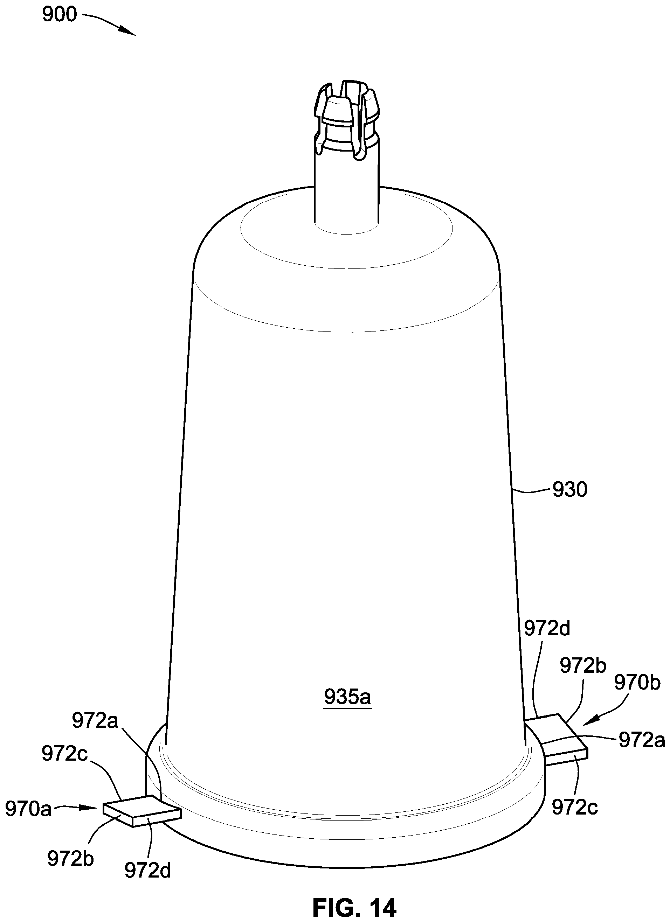

Referring now to FIG. 14, a compounding module 900 includes mixing elements 970a and 970b that are coupled to an outer surface 935a of housing 930 along a first edge 972a, while a second opposing edge 972b is spaced apart from and unconnected to the housing 930. The first edge 972a and the second edge 972b are connected via third edge 972c and fourth edge 972d. Generally, third edge 972c and fourth edge 972d are generally straight edges. However, edges 972a-d can be curved in certain implementations. The mixing elements 970a and 970b of compounding module 900 are generally disposed along the housing 930 nearer to the second open end 931b of the housing 730 than the first end 931a of the housing 730. The mixing elements 970 of compounding module 900 can have a generally trapezoidal shape, a generally rectangular shape, a generally square shape, a generally polygonal shape, or a generally irregular shape.

As is shown in FIG. 14, the mixing elements 970 are generally disposed at an angle relative to the horizontal plane defined by the second open end 931b of the housing 930. As such, the third edge 972c of mixing element 970a is angled down towards the second open end 931b, while the fourth edge 972d of mixing element 970a is angled up towards the first end 931a. Similarly, the third edge 972c of mixing element 970b is angled up towards the first end 931a, while the fourth edge 972d of mixing element 970b is angled down towards the second open end 931b. In other implementations, all of the mixing elements 970 may be angled in the same direction. In implementations having three or more mixing elements 970, the direction at which the mixing elements 970 are angled can alternate.

The mixing elements 970a and 970b can be disposed at an angle of between about 0 degrees and about 40 degrees, between about 10 degrees and about 30 degrees, between about 10 degrees and about 20 degrees, between about 30 degrees and about 40 degrees, between about 14 degrees and about 18 degrees, between about 30 degrees and about 34 degrees, about 16 degrees, or about 32 degrees.

Generally, the first edge 972a and the second edge 972b of the mixing elements 970a and 970b are longer than the third edge 972c and 972d. The first edge 972a and second edge 972b can have a length of between about 5 mm and about 15 mm, about 10 mm, or about 12 mm. The third edge 972c and fourth edge 972d can have a length of between about 0.1 mm and about 10 mm, or about 5 mm. The mixing elements 970a and 970b can also have a thickness of between about 0.1 mm and about 1 mm, about .5 mm, or about .25 mm.

As shown in FIG. 14, the compounding module 900 may include two mixing elements disposed about 180 degrees apart from each other along the outer surface 935a of the housing 930, *i.e.* on opposite sides of the housing 930. In another implementation, the compounding module 900 can include four mixing elements, each disposed about 90 degrees apart from adjacent mixing elements along the outer surface 935a of the housing 930. In a further implementation, the compounding module 900 can include three mixing elements, each disposed about 120 degrees apart from adjacent mixing elements along the outer surface 935a of the housing 930.

In one implementation, compounding module 900 includes two mixing elements disposed on opposite sides of the outer surface 935a of housing 930. Each mixing element has a rectangular shape with dimensions of about 12.0 mm by about 5.0 mm, and a thickness of about 0.5 mm. Each mixing element is disposed at an angle of 16.0 degrees with respect to the horizontal plane. The mixing elements are generally disposed about 180 degrees apart from each other along the outer surface 735a of the housing 730, *i.e.* on opposite sides of the housing 730. In a further implementation, compounding module 900 includes four mixing elements disposed about 90 degrees apart from adjacent mixing elements along the outer surface 935a of housing 930. Each mixing element has a rectangular shape with dimensions of about 12.0 mm by about 5.0 mm, and a thickness of about 0.5 mm. Each mixing element is disposed at an angle of 16.0 degrees with respect to the horizontal plane. In yet a further implementation, compounding module 900 includes two mixing elements disposed on opposite sides of the outer surface 935a of housing 930. Each mixing element has a rectangular shape with dimensions of about 12.0 mm by about 5.0 mm, and a thickness of about 0.5 mm. Each mixing element is disposed at an angle of 32.0 degrees with respect to the horizontal plane. The mixing elements are generally disposed about 180 degrees apart from each other along the outer surface 735a of the housing 730, *i.e.* on opposite sides of the housing 730.

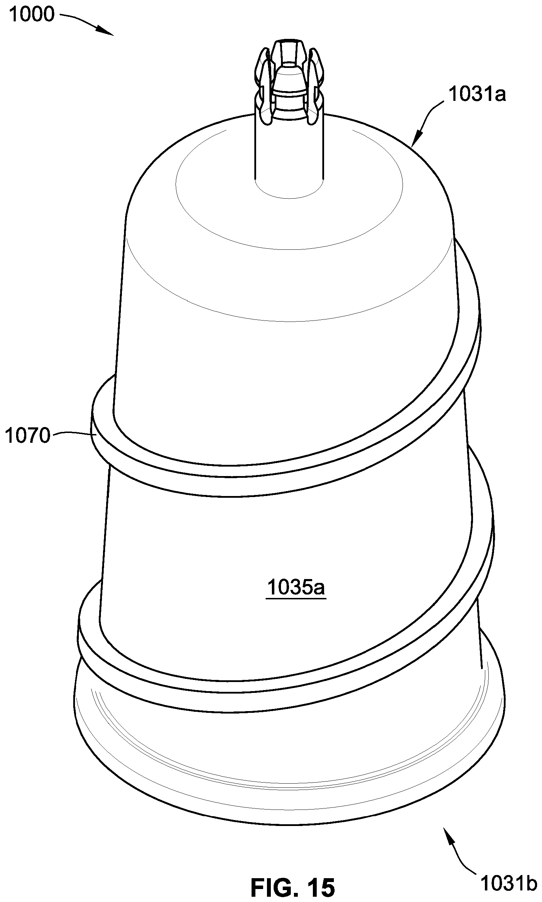

Referring now to FIG. 15, a compounding module 1000 includes mixing element 1070, which is formed as a spiral-shaped ridge that extends from the outer surface 1035a of the housing 1030 and wraps around the outer surface 1035a of housing 1030 between a first end 1031a and a second open end 1031b. A first end of the mixing element 1070 is generally adjacent to the first end 1031a, while a second end of the mixing element 1970 is generally adjacent to the second end 1031b. The mixing element 1070 generally wraps around the outer surface 1035a of the housing 1030 at least once, *i.e.* the mixing element 1070 forms at least one complete loop about a circumference of the outer surface 1035a. As the mixing element 1070 wraps around the outer surface 1035a, the height of the mixing element 1070 relative to the second open end 1031b of compounding module 1000 increases. In the implementation shown in FIG. 15, the mixing element 1070 forms a helix with respect to a vertical axis connecting the first end 1031a and the second open end 1031b. The angle that the mixing element 1070 forms relative to a horizontal plane defined by the second open end 1031b can be between about 0.1 degrees and about 30.0 degrees, between about 10.0 degrees and about 20.0 degrees, or about 16.0 degrees. The mixing element 1070 can have a circular cross-section, a rectangular cross-section, a trapezoidal cross-section, a polygonal cross-section, or an irregular cross-section.

Each of the compounding modules shown in FIGS. 11A-15 lack the agitator of compounding module 300. Thus, the agitator base, which was used to seal off the open end of compounding module 300, is not present in the compounding modules of FIGS. 11A-15. A sealing element is thus needed to seal off the open end of the compounding modules of FIGS. 11A-15 to retain the contents within the compounding module prior to mixing and to keep the contents fresh. The sealing element can be, for example, a puncturable sealing element, a dissolvable sealing element, a peel-off sealing element, or any combination thereof. A puncturable sealing element is configured to be punctured by the beverage mixing system or by the user to allow the material stored in the compounding module to be mixed with the fluid in the vessel. The sealing element is generally coupled to the second open end of the housing thereby sealing the interior cavity.

A dissolvable sealing element is configured to dissolve or disintegrate upon contact with a certain fluid. A dissolvable sealing element for use with the compounding modules of FIGS. 11A-15 could be configured to dissolve upon contact with water, milk, juice, or any other fluid that may be placed in the vessel for use with the beverage mixing system. Because the compounding modules would not have to be mechanically opened, and there would be no physical seal left over after use, the opening and disposal of the compounding modules would be greatly simplified. Generally, the dissolvable sealing element is configured to rapidly dissolve upon contact with the fluid, is non-toxic, and is tasteless to the user.

A peel-off sealing element is configured to be peeled off by a user or by the beverage mixing system itself. The peel-off sealing element can be entirely removed from the compounding module, or may be peeled off partially and thus remain attached to the compounding module. The peel-off sealing element can be configured to be removed in a direction towards the exterior of the compounding module, or may be configured to be removed in a direction towards the interior of the compounding module. The beverage mixing system can be configured to retain the peel-off sealing element once the sealing element has been removed from the compounding module so that the user can dispose of the sealing element after the mixing process. The peel-off sealing element may have a feature, such as an extension portion, that is engageable by the beverage mixing system or by the user to assist in removing the peel-off sealing element.

The compounding modules of FIGS. 11A-15 may also include a second sealing element coupled to the opposing open end of the housing. The second sealing element at least partially encompasses the first sealing element, and may generally comprise a more permanent material. For example, the second sealing element can be a plastic or metal cap that is removed by the user prior to engaging the compounding module with the beverage mixing system. The second sealing element can be removably coupled to the opposing open end of the housing by way of, for example, a threaded connection or an interference/press-fit connection.

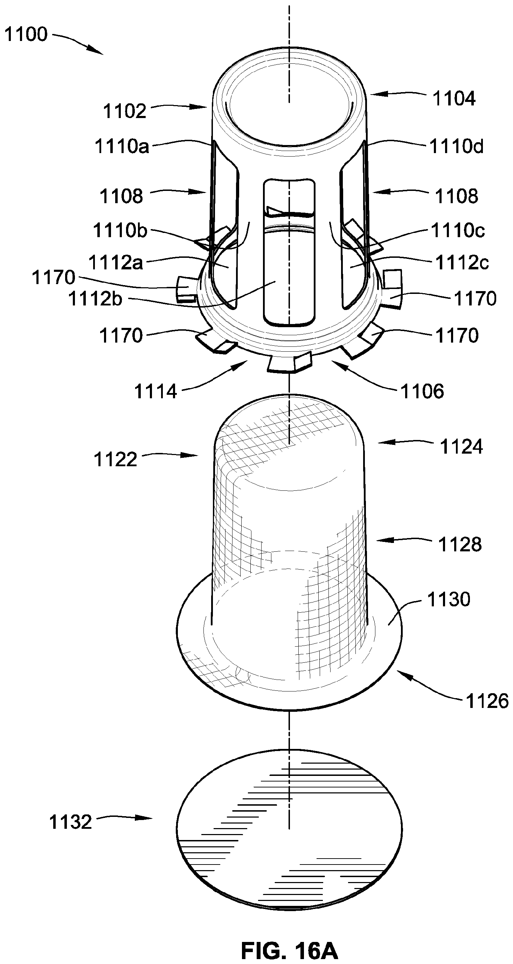

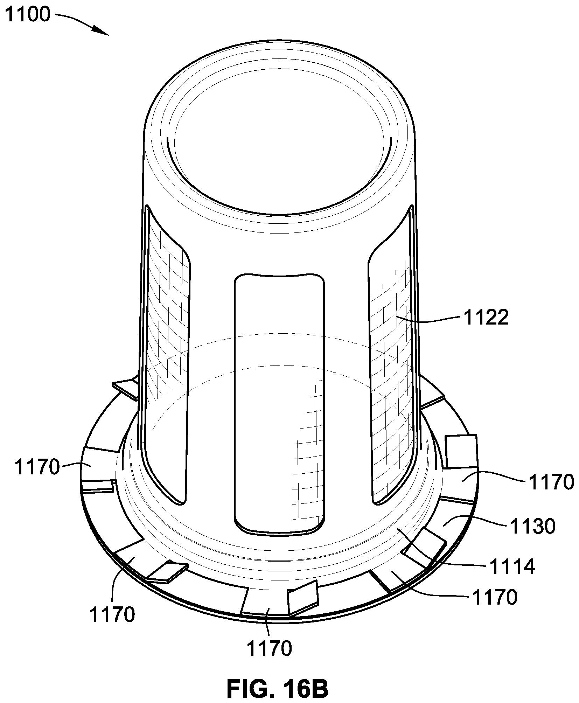

Referring now to FIGS. 16A and 16B, a compounding module 1100 includes frame 1102, a material container 1122, and a sealing element 1132. Frame 1102 includes a first end portion 1104, a second open end portion 1106, and a body portion 1108. Body portion 1108 is formed from a plurality of ribs 11 10a-d that define a plurality of gaps 1112a-c. While the implementation shown in FIGS. 16A and 16B includes four ribs and three gaps, compounding module 1100 may have any number of gaps n defined by *n*+1 ribs. The frame 1102 includes an outwardly extending rim or lip 1114 disposed about the periphery of the second open end portion 1106. The frame further includes one or more mixing elements 1116. The mixing elements 1116 are generally formed near the second open end portion 1106 of the frame 1102. The mixing elements 1116 can be formed as a single unitary part with the frame 1102, or may be separate parts that are connected to the frame 1102. The frame 1102 can be formed from thermoformed sheet plastic. The frame 1102 defines a hollow interior in which the material container 1122 may be disposed.

The material container 1122 includes a first end portion 1124, a second open end portion 1126, and a body portion 1128. The material container 1122 further includes a sealing flange 1130 formed about the periphery of the second open end portion 1126. The sealing flange 1130 is configured to contact the outwardly extending rim 1114 of the frame 1102 when the components of the compounding module 1100 are assembled and create a seal. The material container 1122 may be formed from a thin film material, and is generally configured to hold the material that is to be mixed with the fluid in the vessel.

The sealing element 1132 is configured to seal off the second open end portion 1106 of the frame 1102 and the second open end portion 1126 of the material container 1122. The sealing element can be of a type similar to those discussed above with respect to the compounding modules of FIGS. 11A-15, such as a puncturable sealing element, a dissolvable sealing element, or a peel-off sealing element.

During operation of the beverage mixing system, compounding module 1100 can be directly coupled to the beverage mixing system via a locking feature that may be disposed on the first end portion 1104 of the frame 1102, or that may be a component of the beverage mixing system itself. The compounding module 1100 can be lowered into the vessel and the seal can be removed, thus causing the contents of the compounding module 1100 to be emptied into the vessel. The beverage mixing system can then causes the compounding module 1100 to rotate as described herein to mix the contents and a fluid in the vessel.

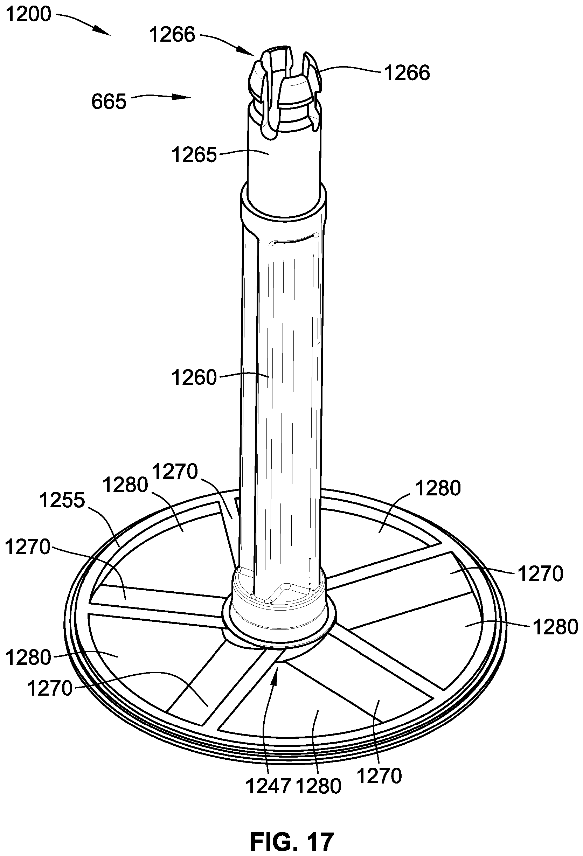

Referring now to FIG. 17, an agitator 1200 that is configured to be slidably coupled to the boss 340 of the housing 330 of compounding module 300 is shown. Agitator 1200 has a structural component 1255, a shaft 1260, and mixing elements 1270. The mixing elements 1270 extend outwardly from the shaft 1270, and are generally disposed near a terminus 1247 of the shaft 1260. A gap 1280 is defined between each of the mixing elements 1270. The mixing elements 1270 may also be coupled to the structural component 1255, which provides the agitator 1200 with a degree of rigidity. The structural component 1255 has the shape of a ring or hollow disk. The structural component 1255, the mixing elements 1270, and the shaft 1260 may all be formed as a single unitary part. In some implementations, the structural component 1255, the mixing elements 1270, and the shaft 1260 are all formed as separate parts and then joined together. In other implementations, any two of the structural component 1255, the mixing elements 1270, and the shaft 1260 may be formed as a unitary part and then later joined with the remaining component.

Each of the mixing elements 1270 is in the form of a blade having a rectangular shape; however, any shape for the mixing elements 1270 is contemplated (e.g., square shape, triangular shape, semi-circular shape, fin-like shape). The mixing elements 1270 are generally tilted such that the rectangle formed by each mixing element 1270 is disposed at an angle relative to a horizontal plane defined by the base 1255. The angle of the mixing elements 1270 can be between about 0 degrees and about 90 degrees, between about 10 degrees and about 80 degrees, between about 30 degrees and about 60 degrees, or about 45 degrees.

The agitator 1200 includes a coupling stem 1265 that is non-rotationally and non-translationally connected to the shaft 1260. Coupling stem 1265 may be monolithically connected to the shaft 1260. The coupling stem 1265 of the compounding module 1200 is configured to be engaged by the drive shaft 170 of the beverage mixing system 100. The coupling stem 1265 includes a translation locking feature or collet 1266 disposed at an end of the coupling stem 1265 opposite the terminus 1247 of the shaft 1200, and includes a multitude of deflectable or bendable fingers 1266a. Each of the fingers 1266a is generally straight (e.g., angle of zero with respect to vertical) and includes a hammer head-like member or a locking tab at an end thereof. The locking tabs are sized and shaped to non-translationally engage with the corresponding translation locking feature 174a (FIG. 7C) of the drive shaft 170. The coupling stem 1265 also includes a rotation locking feature disposed therein (not shown). The rotation locking feature 1268 includes a multitude of agitator splines that define a multitude of agitator channels therebetween that are sized and shaped to non-rotationally engage with the corresponding drive-shaft splines of the rotation locking feature 174b (FIG. 7B) of the drive shaft 170.

In some implementations, agitator 1200 is used with compounding module 300 in a similar fashion as agitator 350 by slidably coupling to the boss 340 of the housing 330. Downward movement of the drive shaft 170 causes the agitator 1200 to translate from a retracted position to an extended position. Because of the gaps 1280 defined between the mixing elements 1270, the internal cavity 337 of the compounding module 300 will be in fluid communication with the outside of the compounding module. As such, the agitator 1200 includes a sealing element used to protect the material stored within the compounding module 300. The sealing element is coupled to at least the structural component 1255 or the mixing elements 1270 and is used to seal off the gaps 1280. The sealing element can be any of the sealing elements discussed herein, such as a puncturable sealing element, a dissolvable sealing element, or a peel-off sealing element.

When the agitator is in the retracted position, the structural component 1255 itself can be configured to form a circumferential seal with the second opposing end of the compounding module. The sealing feature of the compounding module 300 can include the first sealing feature 380a that is integral with the housing 330 of the compounding module 300, as discussed herein. The sealing feature of the compounding module 300 can further include a second sealing feature that is integral with the base 1255 of the agitator 1200. The second sealing feature can include a circumferentially extending edge or lip about an outer portion of the base 1255 of the agitator 1200. When the agitator 1200 is in the sealed position, the edge or lip of the second sealing feature on the base 1255 engages with the bead or protrusion of the first sealing feature 380a on the housing 330 to seal the cavity 337. In other implementations, the housing 330 of the compounding module 300 does not include the boss 340, and the agitator 1200 extends through an opening defined at the first end 331a of the housing 330. In this implementation, the base 1255 of the agitator may or may not be configured to circumferentially seal the cavity 337 of the housing.

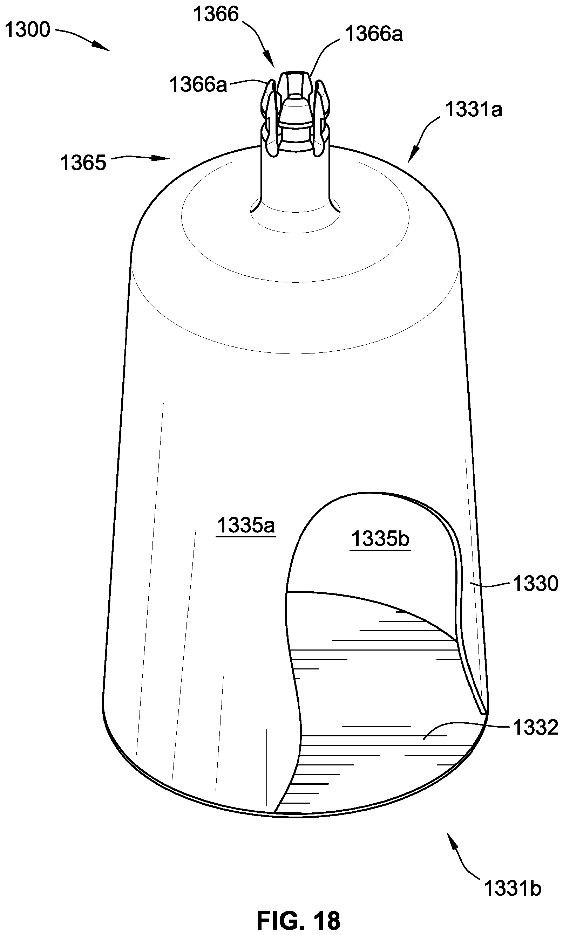

Referring now to FIG. 18, a compounding module 1300, that is the same as, or similar to, the compounding modules of FIGS. 11A-15, has a housing 1330 with an outer surface 1335a and an inner surface 1335b. The compounding module 1300 has a first end 1331a that is closed, and a second opposing end 1331b that is open, thus defining an interior cavity in which the material to be mixed with the fluid in the vessel may be stored. The compounding module 1300 further includes a coupling stem 1365 fixed (e.g., non-rotationally and non-translationally attached) to the first end 1331a of the housing 630. The coupling stem 1365 includes a translation locking feature 1366 disposed at an end of the coupling stem 1365 opposite the first end 1331a of the housing 630, and a rotation locking feature disposed within the coupling stem 1365. The translation locking feature 1366 includes a multitude of deflectable or bendable fingers 1366a.

As shown, compounding module 1300 does not include any mixing elements extending from the outer surface 1335a of the housing 1330. Thus, the outer surface 1335a of the housing 1330 has a generally smooth profile. The outer surface 1335a and the inner surface of the housing are used to mix the material with the fluid in the vessel once the compounding module 1300 is lowered into the vessel and rotated. When the compounding module 1300 is rotated, the outer surface 1335a and the inner surface create sufficient mixing action in the fluid to effectively mix the fluid and the material stored within the compounding module 1300. Compounding module 1300 also includes a sealing element 1332 coupled to the second end 1331b of the housing 1330. The sealing element 1332 of the compounding module 1300 is the same as, or similar to, the sealing element discussed above with respect to FIGS. 11A-15 and/or sealing element 1132.

## Claims

1. A module (300) for use with a system (100), the module (300) comprising:
a housing (330 defining an interior cavity (337 and including a boss (340) that extends from a first end (331a) of the housing (330) into the interior cavity (337) towards a second opposing end (331b) of the housing (330), the boss (340) having an exterior surface and defining an inner bore (342); and
an agitator (350) including a base (355), a shaft (360), and a mixing element (370), the shaft (360) of the agitator (350) extending from the base (355) and being slidable relative to the inner bore (342) of the boss (340) such that the agitator (350) is movable between a fully retracted position, a partially extended position, and a fully extended position,
the module (300) being **characterized in that** the boss (340) includes a flange (367) extending outwardly from the exterior surface and that the mixing element (370) of the agitator (350) extends from the base (355) and includes a portion that is configured to engage the flange (367) of the boss (340) in a non-rotational fashion in response to the agitator (350) being in the partially extended position.

2. The module (300) of claim 1, wherein the mixing element (370) is configured such that the portion of the mixing element (370) does not engage the flange (367) of the boss (340) in a non-rotational fashion in response to the agitator (350) being in the fully extended position.

3. The module (300) of claim 2, wherein rotation of the agitator (350) in the partially extended position causes a corresponding rotation of the housing (330) and wherein rotation of the agitator (350) in the fully extended position does not cause a corresponding rotation of the housing (330).

4. The module (300) of claim 1, wherein the outwardly extending flange (367) extends along at least seventy-five percent of the boss (340).

5. The module (300) of claim 1, wherein the agitator (350) further includes a support element (365) coupled to the base (355) and the mixing element (370) to aid in providing structural rigidity to the mixing element (370), and wherein the support element (365) extends from the base (355) in a manner such that the support element (365) is perpendicular to the mixing element (370).

6. The module (300) of claim 1, wherein the housing (330) includes a first sealing feature (380a) at the second opposing end (331a) of the housing (330) and the base (355) of the agitator (350) includes a second sealing feature (380b) along a perimeter thereof, the first and the second sealing feature (380a,380b) mating to seal the interior cavity (337) when the agitator (350) is in the fully retracted position, and wherein the first sealing feature (380a) includes a circumferentially extended bead and the second sealing feature (380b) includes a circumferentially lip.

7. The module (300) of claim 1, wherein the housing (330) includes a coupler (332) that protrudes from the first end (331a) of the housing (330) away from the interior cavity (337), the coupler (332) to be engaged by a coupling mechanism (110) of the system (100), the coupler (332) having a generally circular neck (333) and a generally circular head (334) that result in the coupler (332) being rotational-orientation agnostic during coupling of the module (300) with the coupling mechanism (110).

8. The module (300) of claim 7, wherein the coupler (332) aids in preventing translation of the housing (330) relative to the coupling mechanism (110) of the system (100).

9. The module (300) of claim 7, wherein the agitator (350) is configured to be engaged by a drive shaft (170) of the system (100) and the drive shaft (170) is configured to (i) cause the agitator (350) to translate relative to the housing (330) between the fully retracted position, the partially extended position, and the fully extended position, (ii) cause the agitator (350) to rotate relative to the coupling mechanism (110) of the system (100), and (iii) cause the housing (330) to rotate relative to the coupling mechanism (110) of the system (100) via the agitator (350) engaging the housing (330) in the partially extended position.

10. The module (300) of claim 1, further comprising a compound material positioned within the interior cavity (337) of the housing (330).

11. The module (300) of claim 9, wherein the drive shaft (170) of the system (100) includes a main shaft portion (171), a secondary shaft portion (172) extending forward from the main shaft portion (171), and a sleeve portion (173) extending forward from the main shaft portion (171), the sleeve portion (173) entirely encompassing the secondary shaft portion (172) therein such that no part of the secondary shaft portion (172) extends out of a forward opening of the sleeve portion (173).

12. The module (300) of claim 11, wherein the secondary shaft portion (172) includes a rotation locking feature (174b) and wherein the sleeve portion (173) includes a translation locking feature (174a), wherein the translation locking feature (174a) is positioned relatively closer to the main shaft portion (171) than the rotation locking feature (174b).

13. The module (300) of claim 7, wherein the coupling mechanism (110) includes a body (112) and a pair of arms (115a, 115b) extending from the body (112), and wherein the coupling mechanism (110) has a generally U-shaped configuration, a first one of the pair of arms (115a) including a first deflectable tab (117a) configured to deflect in a first direction and a second one of the pair of arms (115b) including a second deflectable tab (117b) configured to deflect in an opposing second direction.

14. The module (300) of claim 13, wherein the first deflectable tab (117a) includes a first protrusion (118a) extending towards the second deflectable tab (117b) and the second deflectable tab (117b) includes a second protrusion (118b) extending towards the first deflectable tab (117a), and wherein the body (112) of the coupling mechanism (110) includes a third protrusion (118c) and wherein in response to the coupler (332) being engaged by the coupling mechanism (110), the first (118a), the second (118b), and the third protrusions (118)c of the coupling mechanism (110) provide a three-point support contact with the coupler (332) of the housing (330).

15. The module (300) of claim 14, wherein the first protrusion (118a) includes a first outwardly tapered ramp surface (119a) that leads directly into a first inwardly tapered ramp surface (120a) and wherein the second protrusion (118b) includes a second outwardly tapered ramp surface (119b) that leads directly into a second inwardly tapered ramp surface (120b), and wherein the first and the second outwardly tapered ramp surfaces (119a,b) are at a first angle (θ₁) with respect to a central axis (X_{c}) of the coupling mechanism (110) and wherein the first and the second inwardly tapered ramp surfaces (120a,b) are at a second angle (θ₂) with respect to the central axis (X_{c}) of the coupling mechanism (110), the second angle (θ₂) being greater than the first angle (θ₁) such that a decoupling force of the module (300) from an engagement with the coupling mechanism (110) is larger than a coupling force of the module (300) into an engagement with the coupling mechanism (110).

## Patentansprüche

1. Modul (300) zur Verwendung mit einem System (100), wobei das Modul (300) Folgendes umfasst:
ein Gehäuse (330), das einen inneren Hohlraum (337) definiert und eine Nabe (340) einschließt, die sich von einem ersten Ende (331a) des Gehäuses (330) in den inneren Hohlraum (337) auf ein zweites gegenüberliegendes Ende (331b) des Gehäuses (330) zu erstreckt, wobei die Nabe (340) eine Außenoberfläche aufweist und eine innere Bohrung (342) definiert; und
ein Rührwerk (350), das eine Basis (355), eine Welle (360) und ein Mischelement (370) einschließt, wobei sich die Welle (360) des Rührwerks (350) von der Basis (355) erstreckt und relativ zu der inneren Bohrung (342) der Nabe (340) derart verschiebbar ist, dass das Rührwerk (350) zwischen einer vollständig eingefahrenen Position, einer teilweise ausgefahrenen Position und einer vollständig ausgefahrenen Position beweglich ist,
wobei das Modul (300) **dadurch gekennzeichnet ist, dass** die Nabe (340) einen Flansch (367) einschließt, der sich von der Außenoberfläche nach außen erstreckt, und dass sich das Mischelement (370) des Rührwerks (350) von der Basis (355) erstreckt und einen Abschnitt einschließt, der konfiguriert ist, um als Reaktion darauf, dass sich das Rührwerk (350) in der teilweise ausgefahrenen Position befindet, den Flansch (367) der Nabe (340) in einer nicht drehenden Weise in Eingriff zu nehmen.

2. Modul (300) nach Anspruch 1, wobei das Mischelement (370) derart konfiguriert ist, dass der Abschnitt des Mischelements (370) den Flansch (367) der Nabe (340) als Reaktion darauf, dass sich das Rührwerk (350) in der vollständig ausgefahrenen Position befindet, nicht in einer nicht drehenden Weise in Eingriff nimmt.

3. Modul (300) nach Anspruch 2, wobei eine Drehung des Rührwerks (350) in der teilweise ausgefahrenen Position eine entsprechende Drehung des Gehäuses (330) bewirkt und wobei eine Drehung des Rührwerks (350) in der vollständig ausgefahrenen Position keine entsprechende Drehung des Gehäuses (330) bewirkt.

4. Modul (300) nach Anspruch 1, wobei sich der sich nach außen erstreckende Flansch (367) entlang wenigstens fünfundsiebzig Prozent der Nabe (340) erstreckt.

5. Modul (300) nach Anspruch 1, wobei das Rührwerk (350) ferner ein Stützelement (365) einschließt, das mit der Basis (355) und dem Mischelement (370) gekoppelt ist, um dazu beizutragen, dem Mischelement (370) eine strukturelle Steifigkeit bereitzustellen, und wobei sich das Stützelement (365) von der Basis (355) in einer Weise derart erstreckt, dass das Stützelement (365) senkrecht zu dem Mischelement (370) ist.

6. Modul (300) nach Anspruch 1, wobei das Gehäuse (330) ein erstes Dichtungsmerkmal (380a) an dem zweiten gegenüberliegenden Ende (331a) des Gehäuses (330) einschließt und die Basis (355) des Rührwerks (350) ein zweites Dichtungsmerkmal (380b) entlang eines Umfangs davon einschließt, wobei das erste und das zweite Dichtungsmerkmal (380a, 380b) zusammenpassen, um den inneren Hohlraum (337) abzudichten, wenn sich das Rührwerk (350) in der vollständig eingefahrenen Position befindet, und wobei das erste Dichtungsmerkmal (380a) einen sich in Umfangsrichtung erstreckenden Wulst und das zweite Dichtungsmerkmal (380b) eine in Umfangsrichtung verlaufende Lippe einschließt.

7. Modul (300) nach Anspruch 1, wobei das Gehäuse (330) einen Koppler (332) einschließt, der von dem ersten Ende (331a) des Gehäuses (330) weg von dem inneren Hohlraum (337) vorsteht, wobei der Koppler (332) durch einen Kopplungsmechanismus (110) des Systems (100) in Eingriff genommen werden soll, wobei der Koppler (332) einen im Allgemeinen kreisförmigen Hals (333) und einen im Allgemeinen kreisförmigen Kopf (334) aufweist, die dazu führen, dass der Koppler (332) während des Koppelns des Moduls (300) mit dem Kopplungsmechanismus (110) nicht in der Drehrichtung ausgerichtet ist.

8. Modul (300) nach Anspruch 7, wobei der Koppler (332) dazu beiträgt, eine Verschiebung des Gehäuses (330) relativ zu dem Kopplungsmechanismus (110) des Systems (100) zu verhindern.

9. Modul (300) nach Anspruch 7, wobei das Rührwerk (350) konfiguriert ist, um durch eine Antriebswelle (170) des Systems (100) in Eingriff gebracht zu werden, und die Antriebswelle (170) konfiguriert ist, um (i) zu bewirken, dass sich das Rührwerk (350) relativ zu dem Gehäuse (330) zwischen der vollständig eingefahrenen Position, der teilweise ausgefahrenen Position und der vollständig ausgefahrenen Position verschiebt, (ii) zu bewirken, dass sich das Rührwerk (350) relativ zu dem Kopplungsmechanismus (110) des Systems (100) dreht, und (iii) zu bewirken, dass sich das Gehäuse (330) relativ zu dem Kopplungsmechanismus (110) des Systems (100) über das Rührwerk (350) dreht, das das Gehäuse (330) in der teilweise ausgefahrenen Position in Eingriff nimmt.

10. Modul (300) nach Anspruch 1, das ferner ein Verbundmaterial umfasst, das innerhalb des inneren Hohlraums (337) des Gehäuses (330) positioniert ist.

11. Modul (300) nach Anspruch 9, wobei die Antriebswelle (170) des Systems (100) einen Hauptwellenabschnitt (171), einen Nebenwellenabschnitt (172), der sich von dem Hauptwellenabschnitt (171) nach vorne erstreckt, und einen Hülsenabschnitt (173) einschließt, der sich von dem Hauptwellenabschnitt (171) nach vorne erstreckt, wobei der Hülsenabschnitt (173) den Nebenwellenabschnitt (172) darin derart vollständig umgibt, dass sich kein Teil des Nebenwellenabschnitts (172) aus einer vorderen Öffnung des Hülsenabschnitts (173) heraus erstreckt.

12. Modul (300) nach Anspruch 11, wobei der Nebenwellenabschnitt (172) ein Drehverriegelungsmerkmal (174b) einschließt und wobei der Hülsenabschnitt (173) ein Verschiebungsverriegelungsmerkmal (174a) einschließt, wobei das Verschiebungsverriegelungsmerkmal (174a) relativ näher an dem Hauptwellenabschnitt (171) positioniert ist als das Drehverriegelungsmerkmal (174b).

13. Modul (300) nach Anspruch 7, wobei der Kopplungsmechanismus (110) einen Körper (112) und ein Paar Arme (115a, 115b) einschließt, die sich von dem Körper (112) erstrecken, und wobei der Kopplungsmechanismus (110) eine im Allgemeinen U-förmige Konfiguration aufweist, wobei ein erster des Paars von Armen (115a) eine erste auslenkbare Lasche (117a) einschließt, die konfiguriert ist, um in eine erste Richtung auszulenken, und ein zweiter des Paars von Armen (115b) eine zweite auslenkbare Lasche (117b) einschließt, die konfiguriert, um in eine entgegengesetzte zweite Richtung auszulenken.

14. Modul (300) nach Anspruch 13, wobei die erste auslenkbare Lasche (117a) einen ersten Vorsprung (118a) einschließt, der sich in Richtung der zweiten auslenkbaren Lasche (117b) erstreckt, und die zweite auslenkbare Lasche (117b) einen zweiten Vorsprung (118b) einschließt, der sich in Richtung der ersten auslenkbaren Lasche (117a) erstreckt, und wobei der Körper (112) des Kopplungsmechanismus (110) einen dritten Vorsprung (118c) einschließt und wobei als Reaktion darauf, dass der Koppler (332) durch den Kopplungsmechanismus (110) in Eingriff gebracht wird, der erste (118a), der zweite (118b) und der dritte Vorsprung (118c) des Kopplungsmechanismus (110) einen Dreipunktstützkontakt mit dem Koppler (332) des Gehäuses (330) bereitstellen.

15. Modul (300) nach Anspruch 14, wobei der erste Vorsprung (118a) eine erste sich nach außen verjüngende Rampenoberfläche (119a) einschließt, die direkt in eine erste sich nach innen verjüngende Rampenoberfläche (120a) führt, und wobei der zweite Vorsprung (118b) eine zweite sich nach außen verjüngende Rampenoberfläche (119b) einschließt, die direkt in eine zweite sich nach innen verjüngende Rampenoberfläche (120b) führt, und wobei die erste und die zweite sich nach außen verjüngende Rampenoberfläche (119a, b) in einem ersten Winkel (θ₁) in Bezug auf eine Mittelachse (X_{c}) des Kopplungsmechanismus (110) liegen und wobei die erste und die zweite sich nach innen verjüngende Rampenoberfläche (120a, b) in einem zweiten Winkel (θ₂) in Bezug auf die Mittelachse (X_{c}) des Kopplungsmechanismus (110) stehen, wobei der zweite Winkel (θ₂) derart größer als der erste Winkel (θ₁) ist, dass eine Entkopplungskraft des Moduls (300) aus einem Eingriff mit dem Kopplungsmechanismus (110) größer als eine Kopplungskraft des Moduls (300) in einem Eingriff mit dem Kopplungsmechanismus (110) ist.

## Revendications

1. Module (300) destiné à être utilisé avec un système (100), le module (300) comprenant :
un boîtier (330) définissant une cavité intérieure (337) et comportant un bossage (340) qui s'étend d'une première extrémité (331a) du boîtier (330) dans la cavité intérieure (337) vers une seconde extrémité opposée (331b) du boîtier (330), le bossage (340) ayant une surface extérieure et définissant un alésage interne (342) ; et
un agitateur (350) comportant une base (355), un arbre (360) et un élément de mélange (370), l'arbre (360) de l'agitateur (350) s'étendant depuis la base (355) et pouvant coulisser par rapport à l'alésage interne (342) du bossage (340) de telle sorte que l'agitateur (350) est mobile entre une position complètement rétractée, une position partiellement étendue et une position complètement étendue,
le module (300) étant **caractérisé en ce que** le bossage (340) comporte une bride (367) s'étendant vers l'extérieur depuis la surface extérieure et **en ce que** l'élément de mélange (370) de l'agitateur (350) s'étend depuis la base (355) et comporte un partie qui est conçue pour mettre en prise la bride (367) du bossage (340) de manière non rotative en réponse au fait que l'agitateur (350) se trouve dans la position partiellement étendue.

2. Module (300) selon la revendication 1, dans lequel l'élément demélange (370) est conçu de telle sorte que la partie de l'élément de mélange (370) ne met pas en prise la bride (367) du bossage (340) de manière non rotative en réponse au fait que l'agitateur (350) se trouve dans la position complètement étendue.

3. Module (300) selon la revendication 2, dans lequel la rotation de l'agitateur (350) dans la position partiellement étendue provoque une rotation correspondante du boîtier (330) et dans lequel la rotation de l'agitateur (350) dans la position complètement étendue ne provoque pas de rotation correspondante du boîtier (330).

4. Module (300) selon la revendication 1, dans lequel la bride s'étendant vers l'extérieur (367) s'étend le long d'au moins soixante-quinze pour cent du bossage (340).

5. Module (300) selon la revendication 1, dans lequel l'agitateur (350) comporte en outre un élément d'appui (365) accouplé à la base (355) et à l'élément de mélange (370) pour aider à fournir une rigidité structurelle à l'élément de mélange (370), et dans lequel l'élément d'appui (365) s'étend depuis la base (355) de manière de telle sorte que l'élément d'appui (365) est perpendiculaire à l'élément de mélange (370).

6. Module (300) selon la revendication 1, dans lequel le boîtier (330) comporte un premier élément d'étanchéité (380a) à la seconde extrémité opposée (331a) du boîtier (330) et la base (355) de l'agitateur (350) comporte un second élément d'étanchéité (380b) le long d'un périmètre de celui-ci, le premier et le second élément d'étanchéité (380a, 380b) s'assemblant pour sceller la cavité intérieure (337) lorsque l'agitateur (350) est dans la position complètement rétractée, et dans lequel le premier élément d'étanchéité (380a) comporte un bourrelet étendu circonférentiellement et le second élément d'étanchéité (380b) comporte une lèvre circonférentielle.

7. Module (300) selon la revendication 1, dans lequel le boîtier (330) comporte un coupleur (332) qui fait saillie depuis la première extrémité (331a) du boîtier (330), loin de la cavité intérieure (337), le coupleur (332) devant être en prise par un mécanisme d'accouplement (110) du système (100), le coupleur (332) ayant un collet généralement circulaire (333) et une tête généralement circulaire (334) qui font que le coupleur (332) est indifférent à l'orientation en rotation pendant l'accouplement du module (300) avec le mécanisme d'accouplment (110).

8. Module (300) selon la revendication 7, dans lequel le coupleur (332) aide à empêcher la translation du boîtier (330) par rapport au mécanisme d'accouplement (110) du système (100).

9. Module (300) selon la revendication 7, dans lequel l'agitateur (350) est conçu pour être en prise par un arbre d'entraînement (170) du système (100) et l'arbre d'entraînement (170) est conçu pour (i) amener l'agitateur (350) à effectuer une translation par rapport au boîtier (330) entre la position complètement rétractée, la position partiellement étendue et la position complètement étendue, (ii) faire tourner l'agitateur (350) par rapport au mécanisme d'accouplement (110) du système (100) et (iii) faire tourner le boîtier (330) par rapport au mécanisme d'accouplement (110) du système (100) par l'intermédiaire de l'agitateur (350) mettant en prise le boîtier (330) dans la position partiellement étendue.

10. Module (300) selon la revendication 1, comprenant en outre un matériau composite positionné à l'intérieur de la cavité intérieure (337) du boîtier (330).

11. Module (300) selon la revendication 9, dans lequel l'arbre d'entraînement (170) du système (100) comporte une partie d'arbre principal (171), une partie d'arbre secondaire (172) s'étendant vers l'avant depuis la partie d'arbre principal (171), et une partie de manchon (173) s'étendant vers l'avant depuis la partie d'arbre principal (171), la partie de manchon (173) englobant entièrement la partie d'arbre secondaire (172) à l'intérieur de telle sorte qu'aucune partie de la partie d'arbre secondaire (172) ne s'étend hors d'une ouverture avant de la partie manchon (173).

12. Module (300) selon la revendication 11, dans lequel la partie d'arbre secondaire (172) comporte un élément de verrouillage de rotation (174b) et dans lequel la partie manchon (173) comporte un élément de verrouillage de translation (174a), dans lequel l'élément de verrouillage de translation (174a) est positionné relativement plus près de la partie d'arbre principal (171) que l'élément de verrouillage de rotation (174b).

13. Module (300) selon la revendication 7, dans lequel le mécanisme d'accouplement (110) comporte un corps (112) et une paire de bras (115a, 115b) s'étendant depuis le corps (112), et dans lequel le mécanisme d'accouplement (110) présente une configuration générale en forme de U, un premier de la paire de bras (115a) comportant une première patte pouvant être déviée (117a) conçue pour dévier dans une première direction et un second de la paire de bras (115b) comportant une seconde patte pouvant être déviée (117b) conçue pour dévier dans une seconde direction opposée.

14. Module (300) selon la revendication 13, dans lequel la première patte pouvant être déviée (117a) comporte une première saillie (118a) s'étendant vers la seconde patte pouvant être déviée (117b) et la seconde patte pouvant être déviée (117b) comporte une deuxième saillie (118b) s'étendant vers la première patte pouvant être déviée (117a), et dans lequel le corps (112) du mécanisme d'accouplement (110) comporte une troisième saillie (118c) et dans lequel en réponse au coupleur (332) étant en prise par le mécanisme d'accouplement (110), la première (118a), la deuxième (118b) et la troisième saillies (118)c du mécanisme d'accouplement (110) fournissent un contact d'appui en trois points avec le coupleur (332) du boîtier (330).

15. Module (300) selon la revendication 14, dans lequel la première saillie (118a) comporte une première surface de rampe effilée vers l'extérieur (119a) qui mène directement à une première surface de rampe effilée vers l'intérieur (120a) et dans lequel la deuxième saillie (118b) comporte une seconde surface de rampe effilée vers l'extérieur (119b) qui mène directement à une seconde surface de rampe effilée vers l'intérieur (120b), et dans lequel les première et seconde surfaces de rampe effilées vers l'extérieur (119a, b) sont à un premier angle (θ₁) par rapport à un l'axe central (X_{c}) du mécanisme d'accouplement (110) et dans lequel les première et seconde surfaces de rampe effilées vers l'intérieur (120a, b) forment un second angle (62) par rapport à l'axe central (X_{c}) du mécanisme d'accouplement (110), le second angle (θ₂) étant supérieur au premier angle (θ₁) de telle sorte qu'une force de découplage du module (300) à partir d'une mise ne prise avec le mécanisme d'accouplement (110) est plus grande qu'une force d'accouplement du module (300) dans une mise en prise avec le mécanisme d'accouplement (110).
